# EUROPEAN PATENT SPECIFICATION

(11) **EP 4 276 593 B1**
(45) Date of publication and mention of the grant of the patent: **28.10.2026**
(21) Application number: 22736517.8
(22) Date of filing: 05.01.2022
(51) Int. Cl.: G06F 3/0485, G06F 3/0481, G06F 3/04817, G06F 3/0482, G06F 3/0488, G06F 3/04883, B60K 35/28, B60K 35/29, B60K 35/81, G09G 5/10, G06F 3/0362, B60K 35/10, B60K 35/22, B60K 35/26, B60K 35/80, G06F 3/0338, G06F 3/038, G06F 3/14

(54) **INTERFACE CONTROL METHOD AND APPARATUS, ELECTRONIC DEVICE, AND READABLE STORAGE MEDIUM**
SCHNITTSTELLENSTEUERUNGSVERFAHREN UND -VORRICHTUNG, ELEKTRONISCHE VORRICHTUNG UND LESBARES SPEICHERMEDIUM
PROCÉDÉ ET APPAREIL DE COMMANDE D'INTERFACE, DISPOSITIF ÉLECTRONIQUE, ET SUPPORT DE STOCKAGE LISIBLE

(30) Priority: 11.01.2021 CN 202110033495
(43) Date of publication of application: 15.11.2023
(73) Proprietor: Huawei Technologies Co., Ltd., Shenzhen, Guangdong 518129 (CN)
(72) Inventor: YANG, Zhichao, Shenzhen, Guangdong 518129 (CN); WANG, Yanqing, Shenzhen, Guangdong 518129 (CN); ZHU, Tingfang, Shenzhen, Guangdong 518129 (CN)
(74) Representative: Epping - Hermann - Fischer
(86) International application number: PCT/CN2022/070196
(87) International publication number: WO 2022/148355

(56) References cited:
- CN-A- 1 904 775
- CN-A- 105 117 147
- CN-A- 108 874 288
- CN-A- 109 664 763
- CN-A- 110 209 327
- CN-A- 111 497 611
- US-A1- 2015 309 687
- US-A1- 2015 365 513
- US-A1- 2016 150 020
- US-A1- 2020 125 228
- US-A1- 2020 387 278

## Description

### TECHNICAL FIELD

Embodiments of this application relate to projection control technologies, and in particular, to an interface control method, an electronic device, and a readable storage medium.

### BACKGROUND

A small quantity of applications in a head unit causes limited functions that can be implemented by the head unit. Currently, an interface of a terminal device may be projected on the head unit. In other words, a function of the terminal device may be extended to the head unit, to enrich the functions of the head unit.

A user may control an interface of the head unit through a touch operation on the interface of the head unit. In a driving process, operation efficiency of touching the interface of the head unit by the user is low, which affects driving safety of the user. Particularly, when there are a large quantity of elements on the interface of the head unit, the user needs to spend long time performing the touch operation, which affects driving safety.

CN 110 209 327 A proposes a display interface focus control method, wherein the method establishes a communication connection between a non-touch vehicle's terminal and a mobile terminal. The control instructions for the mobile terminal's operation include information about the type and model of the component being operated. When a focus switch is made on the current display interface of the mobile terminal, the focus control command corresponding to the component type and model is executed.

US 2020/125228 A1 discloses a multiple input rotary dial user interface device. The rotary dial user interface device may include a rotationally fixed touchpad, disposed within a center of a rotatable dial. The document describes that although fixed rotationally, the touchpad of the rotary dial user interface device may move in a linear axial direction, along the rotational axis, with or independently of the rotary dial. The document further describes that the rotary dial user interface device may employ the use of a static rotary encoder sensing rotation of an encoder wheel affixed to the rotary dial to determine momentum characteristics associated with the dial.

### SUMMARY

Embodiments of this application provide an interface control method and apparatus, an electronic device, and a readable storage medium, so that operation efficiency of a user is high, and driving safety of the user can be improved. The present invention is defined by the independent claims. Embodiments labelled as inventive embodiments in the following, which are not covered by the scope of protection defined by the independent claims, are to be understood as examples helpful for understanding the invention, but not as embodiments of the invention. According to a first aspect, an embodiment of this application provides an interface control method, and the method is applied to a head unit in a vehicle. The head unit is connected to a mechanical component, and the mechanical component is included in the vehicle. The method includes: The head unit detects an operation performed by a user on the mechanical component, and the head unit switches a focus window on an interface of the head unit from a first window to a second window in response to the operation, where the interface of the head unit is an interface projected by a terminal device on the head unit. It should be understood that the window is an area of the interface of the head unit, and one window can include at least one icon. In an embodiment, the interface of the head unit can be the same as or different from that of the terminal device. The interface of the head unit is different from that of the terminal device: The interface of the head unit can include an element on the interface of the terminal device and an element that is not included in the interface of the terminal device, such as a projection control component and a voice assistant control component. In the method, when the interface of the terminal device is projected on the head unit, the user may control the interface of the head unit by operating the mechanical component. The user controls the interface of the head unit by operating the mechanical component, which is essentially triggering interaction between the head unit and the terminal device by using the mechanical component, so that the terminal device controls the interface of the head unit, and switching of the focus window on the interface of the head unit can be implemented accordingly. In a current technical solution, icon switching can be implemented in a focus window, but cross-window switching cannot be implemented. Compared with the current technical solution, in this application, a cross-window switching operation can be implemented. In addition, because time consumed by the user to operate the mechanical component is short, operation efficiency of the user is high, and the driving safety of the user can be improved.

The following describes a process in which the user operates the mechanical component to trigger interaction between the head unit and the terminal device.

The head unit detects the operation performed by the user on the mechanical component, may generate a mechanical event based on the operation, and send the mechanical event to the terminal device. In a possible implementation, the head unit may store a mapping relationship between an operation and an event, and the mapping relationship may include the mapping relationship between an operation and an event and a mapping relationship between a mechanical operation and an event. The head unit may use, based on the operation performed by the user on the mechanical component and the mapping relationship, an event mapped by the operation as the mechanical event. In a scenario, the operation is a rotation operation on the mechanical component. The head unit may detect a speed of the rotation operation. If the speed of the rotation operation is greater than or equal to a preset speed, the head unit may generate a fast rotation event, where the fast rotation event includes a fast left rotation event or a fast right rotation event.

After receiving the mechanical event, the terminal device may parse the mechanical event, and obtain a target event. In a possible implementation, the terminal device may store a mapping relationship between a mechanical event and a window switching operation, and the terminal device may use, as the target window switching operation, a window switching operation to which the mechanical event from the head unit is mapped. After determining the target window switching operation, the terminal device may determine, based on the target window switching operation, whether there is a new focus window on the interface of the head unit, where the new focus window is the second window.

In a possible implementation, the operation is a rotation operation on the mechanical component, and a speed of the rotation operation is greater than or equal to a preset speed. The mechanical event is a fast left rotation event, and the target window switching operation is switching a window to the left; or the mechanical event is a fast right rotation event, and the target window switching operation is switching a window to the right. The terminal device may determine, based on the target window switching operation, a position of the first window, and a position of another window on the interface of the head unit, whether the second window exists. It should be understood that a position of a window on the interface of the head unit is determined by four values of the window: left, right, top, and bottom. The left, right, top, and bottom of a window can be considered as the four sides of the window.

The following uses an example in which the target window switching operation is switching a window to the left to describe a manner in which the terminal device determines whether the second window exists.

In a first manner: The terminal device obtains a difference obtained by subtracting a left value of the another window from a left value of the first window; and if a positive difference exists, the terminal device uses another window corresponding to a minimum positive difference as the second window; or if no positive difference exists, the terminal device determines that the second window does not exist.

In a second manner, the terminal device determines whether a window whose value is less than a left value of the first window exists in the another window; and if a window whose value is less than the left value of the first window exists in the another window, the terminal device obtains a difference between the window whose value is less than the left value of the first window and the left value of the first window, and uses a window whose difference is the smallest as the second window; or if a window whose value is less than the left value of the first window does not exist in the another window, the terminal device determines that the second window does not exist.

It should be understood that, the target window switching operation is switching a window to the right (or top or bottom), and "the left value" in the first manner and the second manner may be replaced with "a right value (or a top value or a bottom value)" to determine whether the second window exists on the interface of the head unit.

According to the foregoing two manners, when the fast rotation event is the fast left rotation event, the second window is a window that is closest to the first window and that is located on a left side of the first window; or when the fast rotation event is the fast right rotation event, the second window is a window that is closest to the first window and that is located on a right side of the first window.

If the terminal device determines that the second window exists on the interface of the head unit, the terminal device draws the interface of the head unit whose focus window is the second window; and the terminal device sends, to the head unit, the interface of the head unit whose focus window is the second window. Correspondingly, the head unit may receive, from the terminal device, the interface of the head unit whose focus window is the second window, and display the interface of the head unit whose focus window is the second window, to switch the focus window on the interface of the head unit. In an embodiment, when drawing the interface of the head unit whose focus window is the second window, the terminal device may adapt to a shape and a size of a display interface of the head unit, adjust the drawn focus window to the interface of the head unit whose focus window is the second window, and send the adjusted interface of the head unit whose focus window is the second window to the head unit, and the head unit displays the adjusted interface. Alternatively, in an embodiment, the head unit receives, from the terminal device, the interface of the head unit whose focus window is the second window, and may adapt to a shape and a size of a display interface of the head unit, and adjust the interface of the head unit whose focus window is the second window, to display an adjusted interface. It should be understood that the terminal device or the head unit adjusts the interface of the head unit whose focus window is the second window may be: adjusting a size of the interface of the head unit whose focus window is the second window, or adjusting a layout of elements on the interface of the head unit whose focus window is the second window, so that an adjusted interface of the head unit whose focus window is the second window is adapted to the shape and the size of the display interface of the head unit.

According to a second aspect, an embodiment of this application provides an interface control method. The method is applied to a terminal device, and the method includes: receiving a mechanical event from a head unit; parsing the mechanical event, and obtaining a target window switching operation corresponding to the mechanical event; determining, based on the target window switching operation, that a focus window on an interface of the head unit is switched from a first window to a second window; and sending, to the head unit, the interface of the head unit whose focus window is the second window.

In a possible implementation, the determining, based on the target window switching operation, that a focus window on an interface of the head unit is switched from a first window to a second window includes: determining, based on the target window switching operation, a position of the first window, and a position of another window on the interface of the head unit, that the focus window on the interface of the head unit is switched from the first window to the second window. In a possible implementation, the mechanical event is generated by the head unit based on a rotation operation performed by a user on a mechanical component, and a speed of the rotation operation is greater than or equal to a preset speed; the mechanical event is a fast left rotation event, and the target window switching operation is switching a window to the left; or the mechanical event is a fast right rotation event, and the target window switching operation is switching a window to the right.

In a possible implementation, before the sending, to the head unit, the interface of the head unit whose focus window is the second window, the method further includes: modifying a focus attribute of the second window, where a modified focus attribute of the second window is used to indicate that the second window is the focus window.

According to a third aspect, an embodiment of this application provides an interface control apparatus. The interface control apparatus may be a head unit according to the first aspect, or a chip, a processor, or the like in the head unit described in the first aspect. The head unit is connected to a mechanical component, and the apparatus includes: a mechanical component management module, configured to detect an operation performed by a user on the mechanical component; and a display module, configured to switch a focus window on an interface of the head unit from a first window to a second window, where the interface of the head unit is an interface projected by a terminal device on the head unit.

In a possible implementation, the mechanical component management module is further configured to generate a mechanical event based on the operation, and send the mechanical event to the terminal device; and the display module is further configured to receive, from the terminal device, the interface of the head unit whose focus window is the second window, and display the interface of the head unit whose focus window is the second window.

In a possible implementation, the operation is a rotation operation on the mechanical component; and the mechanical component management module is further configured to: detect a speed of the rotation operation; and generate a fast rotation event in response to a speed of the rotation operation that is greater than or equal to a preset speed, where the fast rotation event includes a fast left rotation event or a fast right rotation event.

In a possible implementation, when the fast rotation event is the fast left rotation event, the second window is a window that is closest to the first window and located on a left side of the first window; or when the fast rotation event is the fast right rotation event, the second window is a window that is closest to the first window and located on a right side of the first window.

According to a fourth aspect, an embodiment of this application provides an interface control apparatus. The interface control apparatus may be the terminal device according to the second aspect, or a chip, a processor, or the like in the terminal device. A head unit is connected to a mechanical component, and the apparatus includes:
a second window management module, configured to: receive a mechanical event from the head unit, parse the mechanical event, obtain a target window switching operation corresponding to the mechanical event, and send the target window switching operation to a window management service module, where the window management service module is configured to: determine, based on the target window switching operation, that a focus window on an interface of the head unit is switched from a first window to a second window, and send, to the head unit, the interface of the head unit whose focus window is the second window.

In a possible implementation, the window management service module is specifically configured to determine, based on the target window switching operation, a position of the first window, and a position of another window on the interface of the head unit, that the focus window on the interface of the head unit is switched from the first window to the second window.

In a possible implementation, the mechanical event is generated by the head unit based on a rotation operation performed by a user on a mechanical component, and a speed of the rotation operation is greater than or equal to a preset speed; the mechanical event is a fast left rotation event, and the target window switching operation is switching a window to the left; or the mechanical event is a fast right rotation event, and the target window switching operation is switching a window to the right.

In a possible implementation, the window management service module is further configured to modify a focus attribute of the second window, where a modified focus attribute of the second window is used to indicate that the second window is the focus window.

According to a fifth aspect, an embodiment of this application provides an electronic device. The electronic device may be the head unit in the first aspect. The electronic device may include a processor and a memory. The memory is configured to store computer-executable program code, where the program code includes instructions. When the processor executes the instructions, the electronic device is enabled to perform the method in the first aspect or the possible implementations of the first aspect. The electronic device may further include a transceiver and a display. The display is configured to display an interface of the head unit, and the transceiver is configured to perform the receiving and sending actions in the first aspect.

According to a sixth aspect, an embodiment of this application provides an electronic device, and the electronic device may be the terminal device according to the second aspect. The electronic device may include a processor and a memory. The memory is configured to store computer-executable program code, where the program code includes instructions. When the processor executes the instructions, the electronic device is enabled to perform the method according to the second aspect or the possible implementations of the second aspect. The electronic device may further include a transceiver, and the transceiver is configured to perform the sending and receiving actions in the second aspect.

According to a seventh aspect, an embodiment of this application provides an interface control apparatus, including a unit, a module, or a circuit configured to perform the method according to the first aspect or the possible implementations of the first aspect. The interface control apparatus may be a head unit, or may be a module applied to a head unit, for example, may be a chip applied to a head unit.

According to an eighth aspect, an embodiment of this application provides an interface control apparatus, including a unit, a module, or a circuit configured to perform the method according to the second aspect or the possible implementations of the second aspect. The interface control apparatus may be a terminal device, or may be a module applied to a terminal device, for example, may be a chip applied to a terminal device.

According to a ninth aspect, an embodiment of this application provides a computer program product including instructions. When the computer program product runs on a computer, the computer is enabled to perform the method according to any one of the first aspect or the possible implementations of the first aspect.

According to a tenth aspect, an embodiment of this application provides a computer program product including instructions. When the computer program product runs on a computer, the computer is enabled to perform the method according to any one of the second aspect or the possible implementations of the second aspect.

According to an eleventh aspect, an embodiment of this application provides a computer-readable storage medium. The computer-readable storage medium stores instructions. When the instructions are run on a computer, the computer is enabled to perform the method according to any one of the first aspect or the possible implementations of the first aspect.

According to a twelfth aspect, an embodiment of this application provides a computer-readable storage medium. The computer-readable storage medium stores instructions. When the instructions are run on a computer, the computer is enabled to perform the method in the second aspect or the possible implementations of the second aspect.

According to a thirteenth aspect, an embodiment of this application provides a vehicle, where the vehicle includes a mechanical component and the head unit according to the fifth aspect, and the head unit is connected to the mechanical component.

For beneficial effects of the possible implementations of the second aspect to the thirteenth aspect, refer to the beneficial effects brought by the first aspect. Details are not described herein again.

Embodiments of this application provide an interface control method and apparatus, an electronic device, and a readable storage medium. The method is applied to a head unit in a vehicle, and the head unit is connected to a mechanical component. The method includes: detecting an operation performed by a user on the mechanical component; and switching a focus window on an interface of the head unit from a first window to a second window in response to the operation, where the interface of the head unit is an interface projected by a terminal device on the head unit. In embodiments of this application, after projection from the terminal device to the head unit, the user operates the mechanical component on the vehicle in short time, to control the interface of the head unit, operation efficiency of the user is high, and driving safety of the user is improved.

### BRIEF DESCRIPTION OF DRAWINGS

FIG. 1A and FIG. 1B are a schematic diagram of an application scenario to which an embodiment of this application is applicable;
FIG. 2 is a schematic diagram of an interface change of a head unit;
FIG. 3 is a schematic diagram of another interface change of a head unit;
FIG. 4 is a schematic diagram of a system architecture to which an embodiment of this application is applicable;
FIG. 5A and FIG. 5B are a schematic diagram of interaction between a head unit and a terminal device according to an embodiment of this application;
FIG. 6 is a schematic diagram of a window in a window management service module according to an embodiment of this application;
FIG. 7 is a schematic diagram of an interface change of a head unit according to an embodiment of this application;
FIG. 8 is a schematic diagram of a status attribute of a window according to an embodiment of this application;
FIG. 9a and FIG. 9b are a schematic diagram of a window change when a window is switched according to an embodiment of this application;
FIG. 10 is a schematic diagram of another interface change of a head unit according to an embodiment of this application;
FIG. 11 is a schematic diagram of a system software structure to which an embodiment of this application is applicable; and
FIG. 12 is a schematic diagram of a structure of a terminal device according to an embodiment of this application.

### DESCRIPTION OF EMBODIMENTS

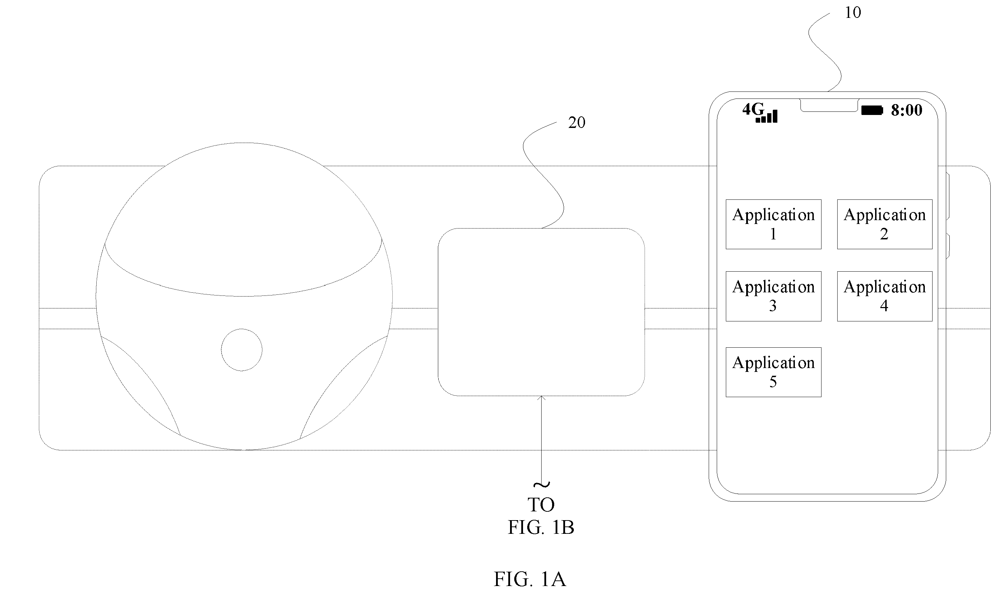

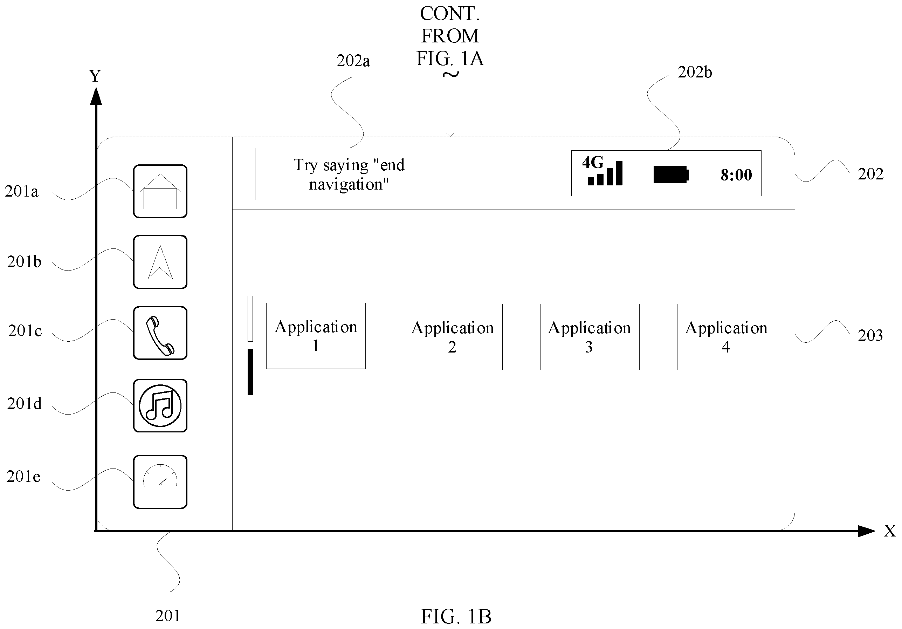

FIG. 1A and FIG. 1B are a schematic diagram of a scenario to which an embodiment of this application is applicable. As shown in FIG. 1A and FIG. 1B, the scenario includes a terminal device 10 and an in-vehicle infotainment (in-vehicle infotainment, IVI) 20. The in-vehicle infotainment 20 may alternatively be referred to as a head unit. The terminal device 10 may be connected to the head unit 20. In FIG. 1A and FIG. 1B, for example, the terminal device 10 is a mobile phone. A manner in which the mobile phone is connected to the head unit may be but is not limited to a wireless connection or a wired connection. For example, the mobile phone is connected to the head unit through a universal serial bus (Universal Serial Bus, USB), or the mobile phone is connected to the head unit through Bluetooth.

The mobile phone may be projected on the head unit. In other words, the head unit may display a projection interface of the mobile phone. As shown in FIG. 1A and FIG. 1B, information about the mobile phone and an application icon may be displayed on an interface of the mobile phone. The information about the mobile phone may include network connection information (for example, a 4G network connection identifier in FIG. 1A and FIG. 1B) of the mobile phone, battery information of the mobile phone, time of the mobile phone, and an icon of an application, for example, icons of five applications: an application 1, an application 2, an application 3, an application 4, and an application 5. In an embodiment, an interface of the head unit may be the same as the interface of the terminal device. For example, the head unit may display the network connection information of the mobile phone, the battery information of the mobile phone, the time of the mobile phone, and the icons of five applications: the application 1, the application 2, the application 3, the application 4, and the application 5.

In an embodiment, the interface of the head unit may be different from the interface of the terminal device. For example, the interface of the head unit may include an element on the interface of the terminal device, and an element that is not included in the interface of the terminal device. For example, the mobile phone is projected on the head unit, and a taskbar window (a dock area) 201, a content level-1 window (a tab area) 202, and a content level-2 window 203 may be displayed on the interface of the head unit. It should be understood that the window is an area on the interface of the head unit. Optionally, the window may include icons of a plurality of applications. The dock area 201 may include a home page icon 201a, a navigation icon 201b, a phone icon 201c, a music icon 201d, and a vehicle power icon 201e. The dock area 201 may be an interface projected from a HiCar application on the mobile phone on the head unit. The HiCar application is an application that extends an application and a service of the mobile phone to the head unit, and may be configured to control the interface of the mobile phone to be projected on the head unit. In an embodiment, the HiCar application may be one of five applications displayed on the interface of the mobile phone. The content level-1 window 202 may include a voice assistant area 202a and a mobile phone information area 202b. The voice assistant area 202a may include a voice assistant icon on the mobile phone, and the voice assistant is configured to implement voice interaction with a user. The mobile phone information area 202b may include the network connection information of the mobile phone, the battery information of the mobile phone, and the time of the mobile phone. The content level-2 window 203 may display the icons of the application 1, the application 2, the application 3, and the application 4. In FIG. 1A and FIG. 1B, a display interface of the terminal device 10 is displayed by using an enlarged interface.

A reason why the icon of the application 5 is not displayed on the interface of the head unit is that the mobile phone may store a trustlist of an application. The trustlist may include an identifier of the application, and the identifier of the application may be an icon or a name of the application, or the like. The application in the trustlist can be projected on the head unit, and an application that is not stored in the trustlist cannot be projected on the head unit. When the mobile phone is projected on the head unit, the mobile phone may determine, based on the trustlist, a target application projected on the head unit, and then project the target application on the head unit. For example, in FIG. 1A and FIG. 1B, the icons of the application 1 to the application 5 are displayed on the interface of the mobile phone, and the mobile phone determines, based on the trustlist, that the application 1 to the application 4 are applications in the trustlist, namely, target applications. The mobile phone may project the icons of the application 1 on the application 4 to the head unit, and filter out the application 5 that is not stored in the trustlist.

An Android system includes an input service management module (input manager service). The input service management module is configured to collect an operation performed by the user on the terminal device or an operation performed by the user on an external device. Correspondingly, the input service management module may receive an event reported by a processor or an externally-connected device in the terminal device. In this embodiment of this application, an example in which an operating system of the terminal device is an Android system is used. When the terminal device is powered on, the terminal device starts the input service management module, that is, the terminal device starts event listening. The head unit is successfully connected to the terminal device. The input module in the head unit may establish a connection to the input service management module in the terminal device, and the head unit may be used as an external device of the terminal device. An input module in the head unit is configured to: collect an operation performed by the user on the head unit, and report the operation performed by the user on the head unit to the terminal device in an event reporting manner.

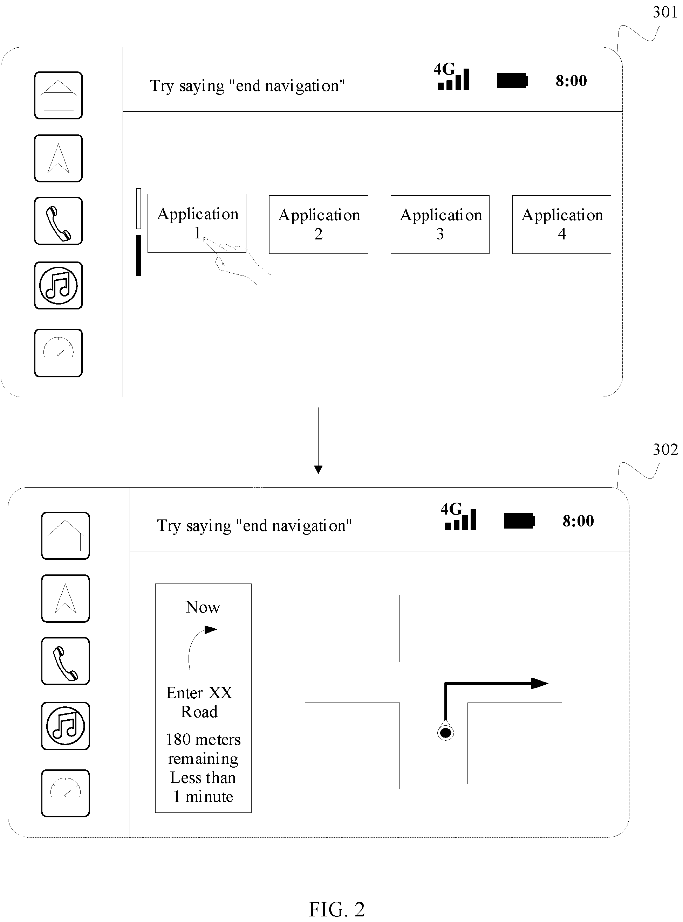

Currently, the user may control the interface of the head unit through a touch operation. For example, as shown in FIG. 2, when the user taps the icon of the application 1 on an interface 301 of the head unit, an interface displayed on the head unit may jump from the interface 301 to an interface 302, and the interface 301 is the same as the interface of the head unit in FIG. 1A and FIG. 1B. A home page of the application 1 may be displayed on the interface 302. In FIG. 2, an example in which the application 1 is a navigation application is used for description. In a possible implementation, the head unit may display the home page of the application 1 in an area corresponding to the content level-2 window, or the head unit may display the home page of the application 1 on an entire interface of the head unit, or the head unit may display the home page of the application 1 in areas corresponding to the content level-1 window and the content level-2 window. A manner in which the head unit displays the display interface in which the user taps the icon of the application 1 is not limited in this embodiment of this application. An example in which the head unit displays the home page of the application 1 in the area corresponding to the content level-2 window is used for the interface 302. It should be noted that the interface of the terminal device may jump to the home page of the application 1, or the terminal device may maintain the interface shown in FIG. 1A and FIG. 1B. In this embodiment of this application, a change of the interface of the terminal device is not limited.

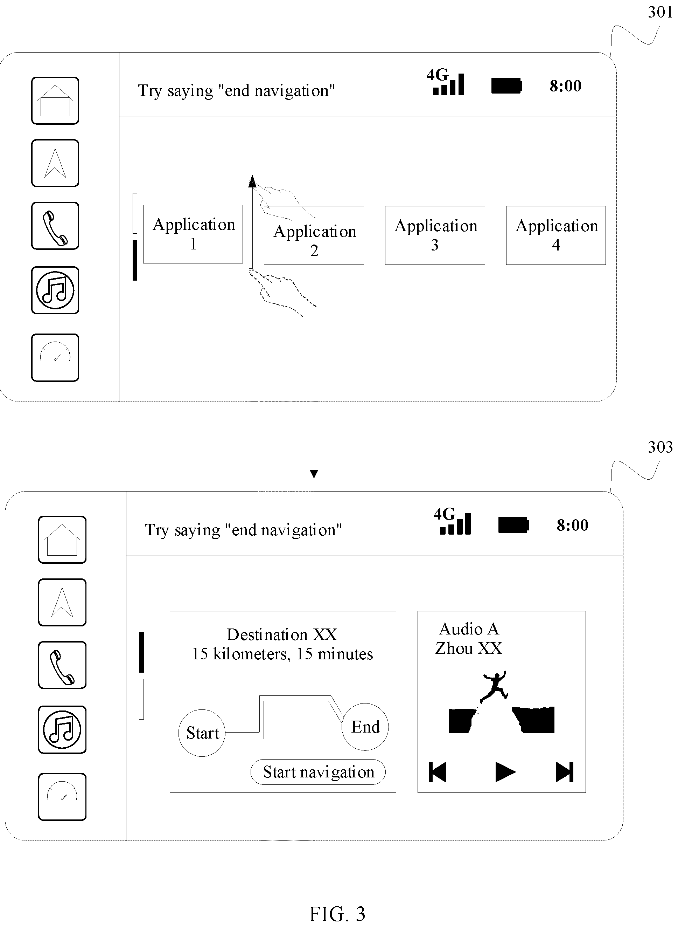

In an embodiment, as shown in FIG. 3, when the user performs a slide-up operation (or a slide-down operation) in the content level-2 window 203, the interface 301 may jump to the interface 303. Different from the interface 301, the content level-2 window 203 in the interface 303 may display an icon of an application in a card form. For example, the application 1 to the application 4 are displayed in the interface 303 in the card form. Because the area of the content level-2 window 203 is small, then icon of the application 1 and the icon of the application 2 in the card form are displayed in the interface 303. In the interface 303, an example in which the application 1 is a navigation application and the application 2 is an audio playback application is used. If the user slides right in the area of the content level-2 window 203 in the interface 303, the user may see the icon of the application 3 and the icon of the application 4 in the card form.

FIG. 2 and FIG. 3 show examples of how the user may control the interface of the head unit in a touch manner on the interface of the head unit. In a driving process, operation efficiency of touching the interface of the head unit by the user is low, which affects driving safety of the user. Particularly, when there are a large quantity of elements on the interface of the head unit, the user needs to spend long time performing a touch operation, which affects driving safety.

This embodiment of this application provides an interface control method. A user may implement interaction between a head unit and a terminal device by performing an operation on a mechanical component disposed on a vehicle, for example, a button, a knob, or a rocker, so that the terminal device controls an interface of the head unit. In a driving process, because the user may operate the mechanical component in short time, operation efficiency is high, and driving safety of the user is improved. In this embodiment of this application, a disposition position of the mechanical component is not limited. For example, the mechanical component may be disposed on a steering wheel, under a display of the head unit, or in an area in the middle of a master cab and a front cab. In an embodiment, the mechanical component may be disposed in a range of a driving field of view of the user. The driving field of view refers to a field of view in which the user looks forward when driving. In this way, the user may operate the mechanical component without swinging the head, to control the interface of the head unit, to further improve driving safety.

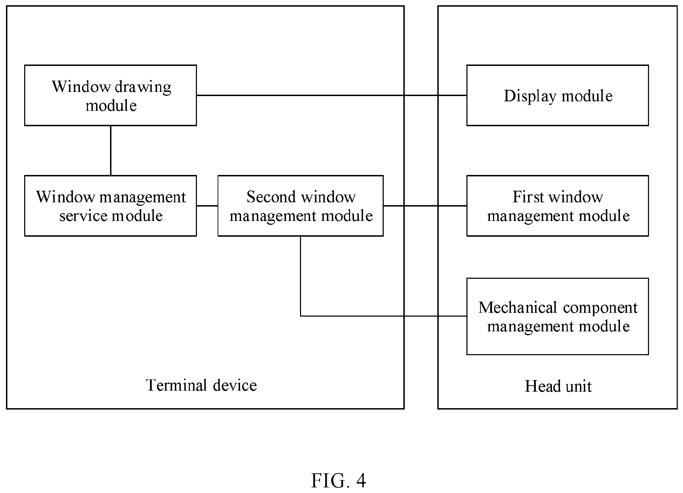

FIG. 4 is a schematic diagram of a system architecture to which an embodiment of this application is applicable. As shown in FIG. 4, the head unit may include a first window management module, a mechanical component management module, and a display module. A terminal device may include a second window management module, a window management service module, and a window drawing module. The first window management module is configured to collect a touch operation of a user, generate a touch event, and report the touch event to the second window management module, to implement an interface change of the head unit shown in FIG. 2 to FIG. 3. The mechanical component management module is configured to collect an operation performed by the user on the mechanical component, generate a mechanical event, and report the mechanical event to the second window management module, to implement interaction between the head unit and the terminal device. In an embodiment, an input module in the head unit may include the first window management module and the mechanical component management module. The service management module may include the second window management module. It should be understood that the system architecture shown in FIG. 4 is applied to a vehicle. The vehicle may include the head unit and the mechanical component, and the head unit may be connected to the mechanical component. Specifically, the mechanical component management module may be connected to the mechanical component.

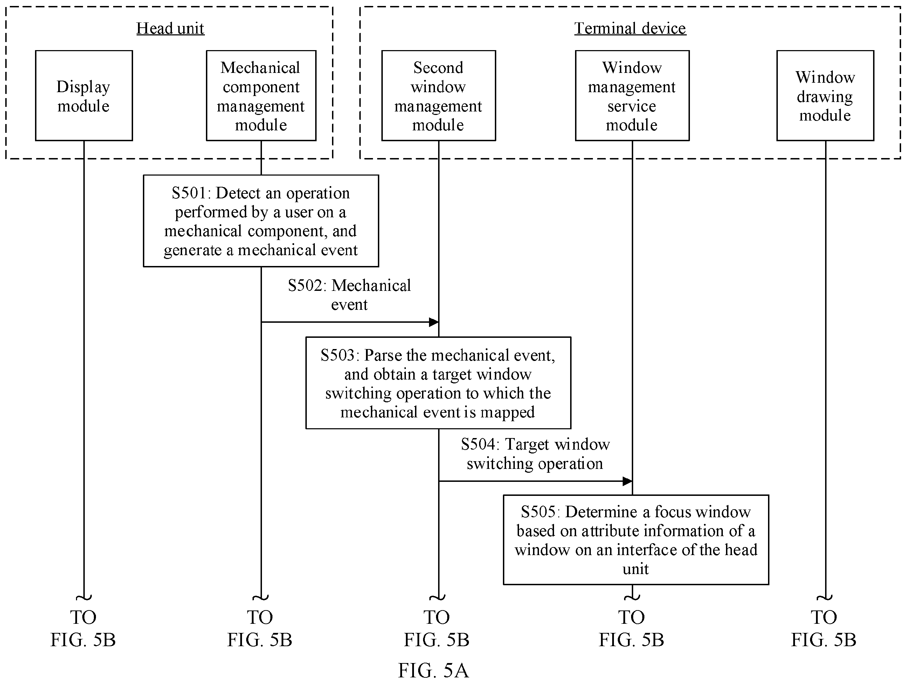

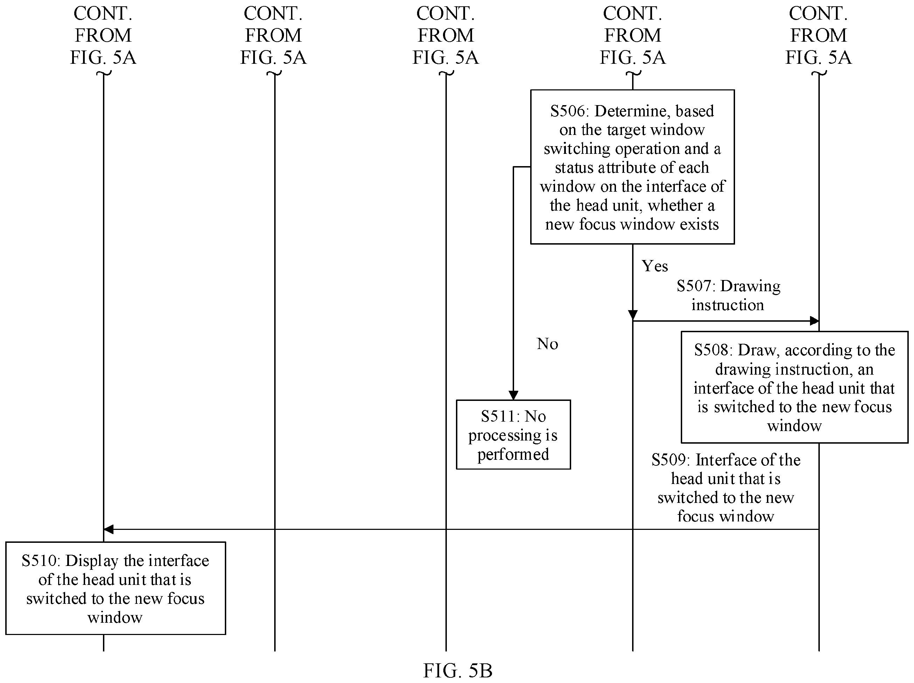

With reference to FIG. 4, the following describes an interaction process between the head unit and the terminal device. FIG. 5A and FIG. 5B are a schematic diagram of interaction between a head unit and a terminal device according to an embodiment of this application. The interaction method shown in FIG. 5A and FIG. 5B may include the following steps.

S501: A mechanical component management module detects an operation performed by a user on a mechanical component, and generates a mechanical event.

In a possible implementation, the mechanical component disposed on a vehicle may be but is not limited to a button, a knob, or a rocker. In this manner, the mechanical component may report the operation performed by the user on the mechanical component. Correspondingly, the mechanical component management module may detect the operation from the mechanical component, and generate the mechanical event based on the operation of the user. For example, if the mechanical component is the button, the operation performed by the user on the mechanical component may be pressing. For example, if the mechanical component is the knob, the operation performed by the user on the mechanical component may be left rotation or right rotation. For example, the mechanical component is the rocker, and the operation performed by the user on the mechanical component may be pushing up, pushing down, pushing left, pushing right, or the like.

In a possible implementation, one mechanical component is disposed in the vehicle. The mechanical component management module may store a first mapping relationship, and the first mapping relationship is used to represent a mapping relationship between a user operation and a mechanical event. The mechanical component management module may generate the mechanical event based on the operation performed by the user and the first mapping relationship. It should be understood that the mechanical component management module may further store the first mapping relationship in a database format or an extensible markup language (extensible markup language, XML) format. Table 1 is an example of a format. In Table 1, an example in which the mechanical component in the vehicle is the knob is used for description.

**Table 1**

| Operation | Mechanical event |
|---|---|
| Left rotation | KEYCODE_UPAD_LEFT |
| Right rotation | KEYCODE_UPAD_RIGHT |
| Fast left rotation | KEYCODE_XXX_LEFT |
| Fast right rotation | KEYCODE_XXX_RIGHT |

For example, as shown in Table 1, if the mechanical component management module collects that the operation performed by the user on the knob is the "left rotation", the generated mechanical event may be "KEYCODE_UPAD_LEFT" corresponding to the "left rotation" in Table 1. For the left rotation and the fast left rotation, and the right rotation and the fast right rotation, the mechanical component management module may determine, based on an operation speed of the user, whether the operation is the "left rotation" or the "fast left rotation", or the "right rotation" or the "fast right rotation".

Using the "fast left rotation" and the "left rotation" as an example, the mechanical component management module may collect the operation performed by the user on the mechanical component and the operation speed of the user. The fast left rotation means that the user rotates the knob left, and a speed at which the user rotates the knob is greater than or equal to a preset speed. The left rotation means that the user rotates the knob left, and a speed at which the user rotates the knob is less than the preset speed. If detecting that the operation performed by the user on the knob is the left rotation, and detecting that the speed at which the user rotates the knob is greater than the preset speed, the mechanical component management module determines that the operation of the user is the "fast left rotation". Therefore, the mechanical component management module may generate, according to Table 1, the mechanical event "KEYCODE_XXX_LEFT" corresponding to the "fast left rotation".

It should be understood that the preset speed may be predefined. Alternatively, the preset speed may be set by the user. For example, the user may set the preset speed on the head unit, and the preset speed is stored in the mechanical component management module. Alternatively, the preset speed may be a preset speed obtained by the mechanical component management module by using an artificial intelligence learning algorithm based on an operation speed at which the user historically operates the mechanical component. For example, the mechanical component management module may divide the operation speed at which the user historically operates the mechanical component into an operation speed interval corresponding to the "left rotation" and an operation speed interval corresponding to the "fast left rotation", and use a speed between the two operation speed intervals as the preset speed. When the mechanical component management module obtains the preset speed by using the artificial intelligence learning algorithm, the mechanical component management module may obtain the preset speed at intervals of preset duration based on an operation habit of the user, to match the operation habit of the user, and improve user experience. In this embodiment of this application, a mechanical event corresponding to the "fast left rotation" may be referred to as a fast left rotation event, and a mechanical event corresponding to the "fast right rotation" may be referred to as a fast right rotation event. Fast rotation events may include the fast left rotation event and the fast right rotation event.

In a possible implementation, at least two types of mechanical components may be disposed on the vehicle. The user performs a same operation on different mechanical components, and mechanical events generated by the mechanical component management module may be different. In this manner, the mechanical component management module may generate a mechanical event based on a mechanical component operated by the user and an operation of the user. Optionally, the mechanical component management module may store a second mapping relationship, and the second mapping relationship is used to represent a mapping relationship between a mechanical component, an operation, and a mechanical event, as shown in Table 2. The mechanical component management module may generate the mechanical event based on the mechanical component operated by the user, the operation performed by the user, and the second mapping relationship.

**Table 2**

| Mechanical component | Operation | Mechanical event |
|---|---|---|
| Knob | Left rotation | KEYCODE_UPAD_LEFT |
| | Right rotation | KEYCODE_UPAD_RIGHT |
| | Fast left rotation | KEYCODE_XXX_LEFT |
| | Fast right rotation | KEYCODE_XXX_RIGHT |
| Rocker | Push up | KEYCODE_XXX_UP |
| | Push down | KEYCODE_XXX_DOWN |
| | Push left | KEYCODE_XXX_LEFT1 |
| | Push right | KEYCODE_XXX_RIGHT2 |

For example, as shown in Table 2, if the mechanical component management module detects that the mechanical component operated by the user is the "rocker", and the operation is pushing the rocker up, the mechanical event "KEYCODE_XXX_UP" is generated based on the mechanical component "rocker", the operation "push up" of the user, and the second mapping relationship.

It should be understood that the mechanical event field shown in Table 2 is an example. For example, if the mechanical event corresponding to the rocker is "KEYCODE_XXX_UP", the mechanical event may alternatively be "KEYCODE_ROCKER_UP", where "ROCKER" may represent the rocker. Similarly, if a mechanical event corresponding to the knob is "KEYCODE_XXX_LEFT", the mechanical event may alternatively be "KEYCODE_KNODE_LEFT", where "KNODE" may represent the knob.

S502: The mechanical component management module sends the mechanical event to a second window management module.

In a possible implementation, the mechanical component management module may send the mechanical event to the second window management module. Correspondingly, the second window management module may invoke a dispatchUnhandledKey method to receive the mechanical event from the mechanical component management module.

S503: The second window management module parses the mechanical event, and obtains a target window switching operation to which the mechanical event is mapped.

The second window management module receives the mechanical event from the mechanical component management module, and may invoke a handleHicarExtraKeys method to parse the mechanical event. It should be understood that, that the second window management module parses the mechanical event may be understood as follows. The second window management module stores a mapping relationship between a mechanical event and a window switching operation, and the second window management module uses, based on the mechanical event from the mechanical component management module and the mapping relationship between a mechanical event and a window switching operation, a window switching operation mapped to the mechanical event in the mapping relationship as the target window switching operation. For example, the mapping relationship between a mechanical event and a window switching operation may be shown in the following Table 3.

**Table 3**

| Mechanical event | Window switching operation |
|---|---|
| KEYCODE_UPAD_LEFT | Navigation button, left |
| KEYCODE_UPAD_RIGHT | Navigation button, right |
| KEYCODE_XXX_LEFT | Switching a window to the left |
| KEYCODE_XXX_RIGHT | Switching a window to the right |
| KEYCODE_XXXUP | Switching a window up |
| KEYCODE_XXX_DOWN | Switching a window down |
| KEYCODE_XXX_LEFT1 | Switching a window to the left |
| KEYCODE_XXX_RIGHT2 | Switching a window to the right |

As shown in Table 3, the window switching operation "navigation button, left" represents switching an element to the left in a focus window, and the "navigation button, right" represents switching an element to the right in the focus window. Switching a window to a direction in the window switching operation is used to represent switching the focus window to a window in the direction of the focus window. For example, "switching a window to the left" indicates that the focus window is switched to a window on the left of the focus window.

The second window management module may obtain, based on the mechanical event and the mapping relationship between a mechanical event and a window switching operation shown in the

Table 3, the target window switching operation to which the mechanical event is mapped. For example, if the mechanical event is "KEYCODE_XXX_LEFT", the target window switching operation to which the mechanical event is mapped is "switching a window to the left".

In a possible implementation, the window switching operation may be represented by using an identifier such as a number, a letter, or a combination.

S504: The second window management module sends the target window switching operation to a window management service module.

For example, the second window management module may send "switching a window to the left" to the window management service module, and the window management service module determines that a corresponding window switching operation is "switching a window to the left". In a possible implementation, the window switching operation corresponds to an identifier, and the second window management module may send the identifier of the target window switching operation to the window management service module. In this manner, the window management service module stores a mapping relationship between a window switching operation and an identifier of the window switching operation, and the window management service module may determine the target window switching operation based on the identifier of the target window switching operation and the mapping relationship between a window switching operation and an identifier of the window switching operation. For example, if the target switching operation is "switching a window to the left", and an identifier corresponding to the target switching operation is "LEFT", the second window management module may send "LEFT" to the window management service module. The window management service module may determine, based on the mapping relationship between a window switching operation and an identifier of the window switching operation, that "LEFT" represents "switching a window to the left".

S505: The window management service module determines the focus window based on attribute information of a window on an interface of the head unit.

The window management service module may store window information. The window information may include information about a window on an interface of the terminal device and information about the window on the interface of the head unit. In a possible implementation, a root window container (root window container) in the window management service module stores the window information. The window information may include attribute information of the window and information about an element in the window. It should be understood that an element in the window includes but is not limited to a text, a picture, or a box displayed in the window.

The attribute information of the window may include a display identification document (display identity document, display ID) of the window, a visible attribute of the window (that is, whether the user may see the window on the interface), a focus attribute of the window (that is, whether the window is a focus window), and a status attribute (window state) of the window. The window in the terminal device and the window in the head unit may be distinguished by using different identifiers, and the identifiers are not limited to digits, characters, and the like. In this embodiment of this application, the display ID is used to distinguish between the window in the terminal device and the window in the head unit. It should be understood that windows with a same display ID are windows of a same device (the head unit or the terminal device). The visible attribute of the window may be, for example, represented by visible (visible) or invisible (invisible) in the attribute information. The focus attribute of the window may be, for example, represented by a value corresponding to focus in the attribution information. For example, yes (yes) indicates that the window is the focus window; or no (no) indicates that the window is not the focus window.

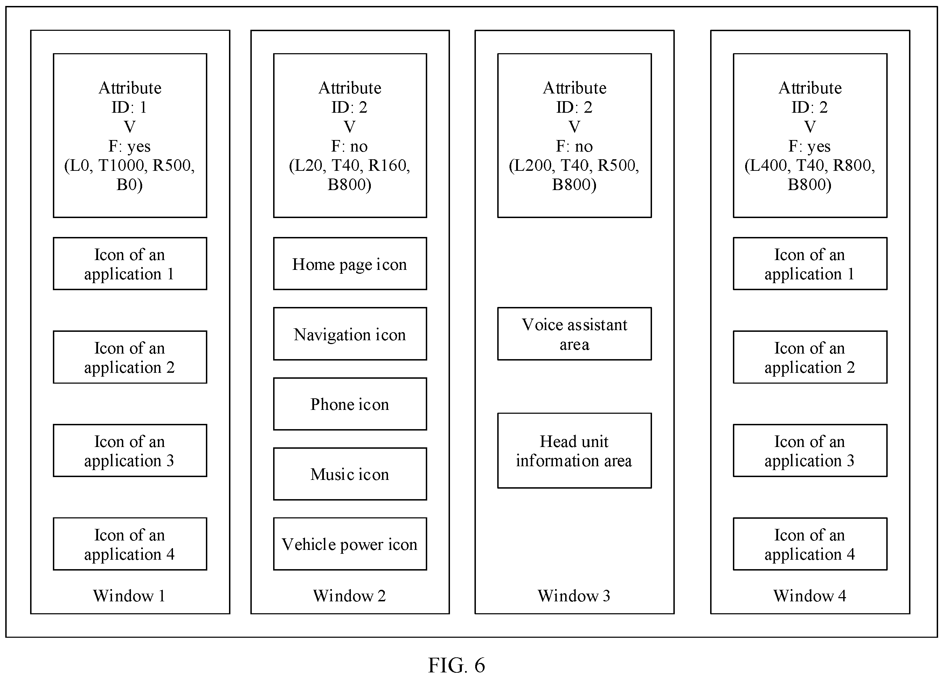

The status attribute of the window may include a position of the window. The position of the window is determined by coordinates of two points of upper left and lower right of the window. The status attribute of the window may be identified by four values: left (left), top (top), right (right), and bottom (bottom). The left (left), top (top), right (right), and bottom (bottom) of the window may be regarded as four sides: left, top, right, and bottom of the window respectively. For example, a status attribute of a window 4 may be (left 200, top 40, right 500, and bottom 800), as shown in FIG. 6. The information about the element in the window may include coordinates of the element in the window on the interface.

FIG. 6 is a schematic diagram of windows in the window management service module according to an embodiment of this application. FIG. 6 is a schematic diagram of windows on interfaces of the terminal device and the head unit shown in FIG. 1A and FIG. 1B. In FIG. 6, an example in which a display ID of a window in the terminal device is 1, and a display ID of a window in the head unit is 2 is used for description. As shown in FIG. 6, the window management service module may store four windows: a window 1, a window 2, a window 3, and the window 4. It should be understood that the window management service module may number or not number stored windows. For description, in FIG. 6, the windows are numbered. For example, the windows are numbered as the window 1 to the window 4. The window 1 is a window in the terminal device, and the window 1 may include information about icons of an application 1 to an application 4, for example, the icons of the application 1 to the application 4, and coordinates of the application 1 to the application 4 on the interface of the terminal device. The window 2 to the window 4 are windows in the head unit. The window 2 is a taskbar window, and the window 2 may include information about a home page icon 201a, a navigation icon 201b, a phone icon 201c, a music icon 201d, and a vehicle power icon 201e, for example, the icons 201a, 201b, 201c, 201d, and 201e, and coordinates of the icons on the interface of the head unit. The window 3 is a content level-1 window, and the window 3 includes information of a voice assistant area 202a and a mobile phone information area 202b, for example, coordinates of elements in 202a and 202b on the interface of the head unit. The window 4 is a content level-2 window. The window 4 includes the information about the icons of the application 1 to the application 4, for example, the icons of the application 1 to the application 4, and coordinates of the icons of the application 1 to the application 4 on the interface of the head unit. It should be understood that in FIG. 6, an abbreviated ID is used to represent the display ID, I is used to represent invisible, V is used to represent visible, F is used to represent focus, L is used to represent left, R is used to represent right, T is used to represent top, and B is used to represent bottom. In an embodiment, a display ID of the window in the terminal device is 0, and a display ID of the head unit connected to the terminal device is 1. In this embodiment, each time the terminal device is connected to an electronic device, a display ID of the electronic device may be increased by 1 based on that "a display ID is 1". For example, the display ID of the electronic device is 2.

For example, if a value corresponding to focus in the window 4 is (yes), a current focus window is the window 4. The window management service module may determine, based on the attribute information of the window displayed on the interface of the head unit, that the focus window is the window 4.

S506: The window management service module determines, based on the target window switching operation and a status attribute of each window on the interface of the head unit, whether a new focus window exists. If a new focus window exists, perform S507; or if a new focus window does not exist, perform S511.

After determining the focus window, the window management service module may obtain a next focus window, that is, a new focus window, based on the target window switching operation or the identifier of the target window switching operation. If the window management service module may obtain the next focus window, the window management service determines that the new focus window exists. If the window management service module does not obtain the next focus window, the window management service determines that the new focus window does not exist. The status attribute of each window on the head unit includes a status attribute of the focus window and a status attribute of another window on the interface of the head unit. In this embodiment of this application, to distinguish between the focus window and the new focus window, the focus window may be referred to as a first window, and the new focus window may be referred to as a second window. The following uses the "focus window" and the "new focus window" as an example for description.

The window management service module may obtain the new focus window based on the status attribute of the focus window, the status attribute of the another window in the head unit, and the target window switching operation. For example, if the target window switching operation is switching a window to the left, in a possible implementation, the window management service module may determine whether a third window whose left (left) value is less than a left (left) value of the focus window exists in the head unit. If one third window exists, the third window may be used as the new focus window. If a plurality of third windows exists, differences between the left value of each third window and the left (left) value of the focus window may be obtained, and a third window with a minimum difference is used as the new focus window.

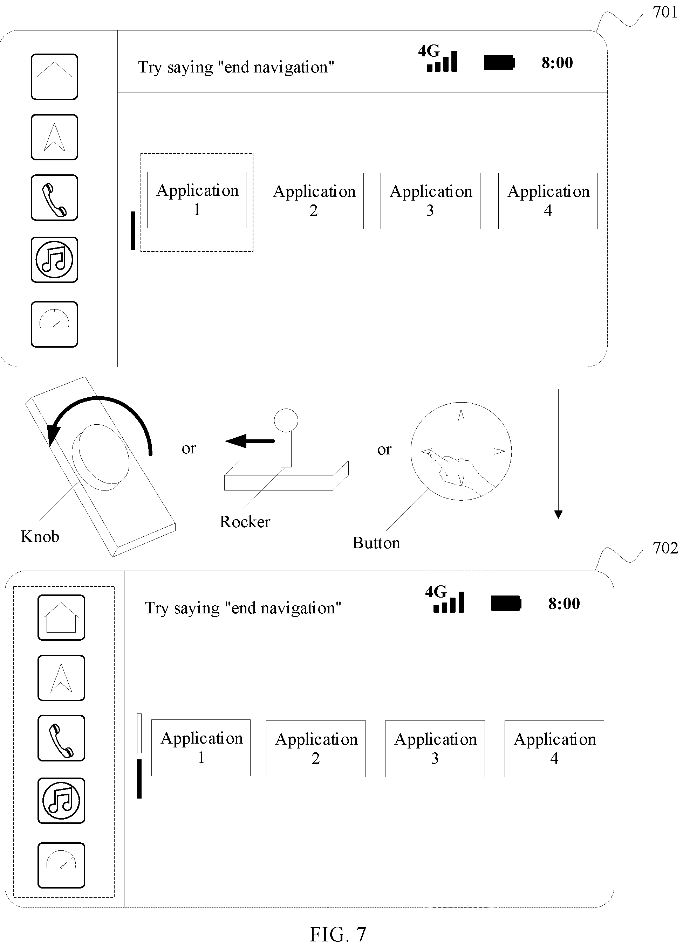

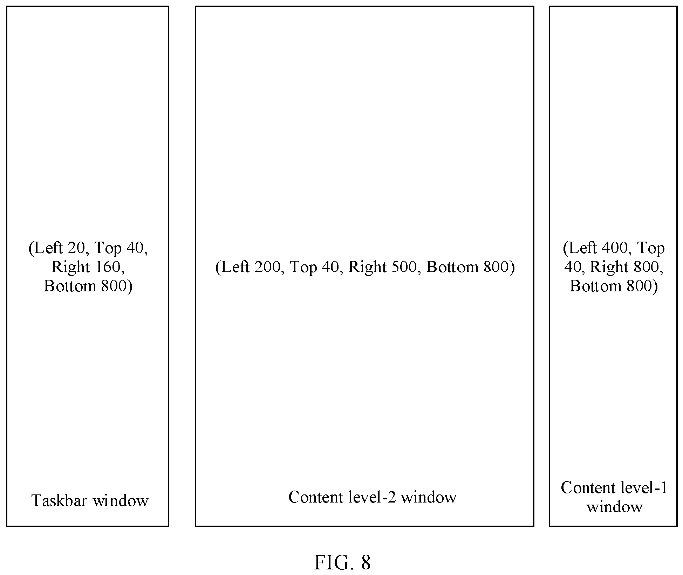

For example, as shown in FIG. 7, a difference between the interface 701 and the interface 301 lies in that the user taps the icon of the application 1, and the icon of the application 1 in the content level-2 window is in a selected state. In an interface 701, an example in which a selection box surrounds the icon of the application 1 is used to represent that the application 1 is in the selected state. In FIG. 7, a dashed box is used to represent the selection box. A focus window in the interface 701 is a content level-2 window to which the icon of the application 1 belongs, that is, the window 4. When the user fastly rotates the knob to the left, based on the foregoing description, the window management service module may determine that the target window switching operation is "switching a window to the left". The window management service module determines, according to the left (left) value 200 of the focus window, whether a third window whose left (left) value is less than 200 exists in the head unit. As shown in FIG. 8, the window management service module may query left (left) values of the window 2 and the window 3, and determine that only a left (left) value of the window 2 (the dock area) is 20, which is less than the left (left) value 200 of the window 4, so that the window management service module may determine that the new focus window exists, and the new focus window is the window 2.

In this implementation, if the target window switching operation is switching a window to the right, the window management service module may determine whether a third window whose right (right) value is less than a right (right) value of the focus window exists in the head unit, and if the third window exists, use the third window whose right (right) value is the smallest difference as the new focus window. If the target window switching operation is switching a window up, the window management service module may determine whether a third window whose top (top) value is less than a top (top) value of the focus window exists in the head unit, and if the third window exists, use the third window whose top (top) value is the smallest difference as the new focus window. If the target window switching operation is switching a window down, the window management service module may determine whether a third window whose bottom (bottom) value is less than a bottom (bottom) value of the focus window exists in the head unit, and if the third window exists, use the third window whose bottom (bottom) value is the smallest difference as the new focus window.

For example, if the target window switching operation is switching a window to the left, in a possible implementation, the window management service module may obtain a difference obtained by subtracting a left (left) value of another window in the head unit from a left (left) value of the focus window, and use a window whose difference is a positive value and whose value is the smallest as the new focus window. If no positive value exists in the differences, it is determined that there is no new focus window. For example, if the focus window is the window 4, a difference obtained by subtracting a left (left) value of the window 2 from a left (left) value of the window 4 and a difference obtained by subtracting a left (left) value of the window 3 from a left (left) value of the window 4 are obtained. A difference between the window 4 and the window 2 is (200-20), and is 180, and a difference between the window 4 and the window 3 is (200-400), and is -200. In this case, the window 2 whose difference is a positive value may be used as a new focus window. Similarly, if the target window switching operation is switching a window to the right, the window management service module obtains a difference obtained by subtracting a right (right) value of another window in the head unit from a right (right) value of the focus window, and uses a window whose difference is a positive value and whose value is the smallest as the new focus window. If the target window switching operation is switching a window up, the window management service module may obtain a difference obtained by subtracting a top (top) value of another window in the head unit from a top (top) value of the focus window, and use a window whose difference is a positive value and whose value is the smallest as the new focus window. If the target window switching operation is switching a window down, the window management service module may obtain a difference obtained by subtracting a bottom (bottom) of another window in the head unit from a bottom (bottom) of the focus window, and use a window whose difference is a positive value and whose value is the smallest as the new focus window.

It may be understood that, if the target window switching operation is switching a window to the left, in a possible implementation, the window management service module may obtain a difference obtained by subtracting a left (left) value of a focus window from a left (left) value of another window in the head unit, and use a window whose difference is a negative value and whose absolute value is the smallest as the new focus window. If no negative value exists in the differences, it is determined that no new focus window exists. When the target window switching operation is switching a window to the right (or up or down), the operation of determining a new focus window by the window management service module is similar to the target window switching operation that is switching a window to the left.

In an embodiment, the window management service module may determine a new focus window based on the target window switching operation. For example, if the target window switching operation is switching a window to the left, the window management service module may determine, based on a layout of the interface of the head unit, whether there is a window on a left side of the focus window. If there is a window on the left side of the focus window, the window management service module uses a first window on the left side of the focus window as the new focus window; or if there is no window on the left side of the focus window, the window management service module determines that no new focus window exists. It should be understood that, when the target window switching operation is switching a window to the left, the window management service module determines whether there is a window on the right side of the focus window. When the target window switching operation is switching a window up, the window management service module determines whether there is a window above the focus window. When the target window switching operation is switching a window down, the window management service module determines whether there is a window below the focus window.

In an embodiment, S506 may be replaced as follows: The window management service module determines, based on the target window switching operation and a position of each window on the interface of the head unit, whether there is a new focus window. If there is a new focus window, perform S507; or if there is no new focus window, perform S511.

S507: The window management service module sends a drawing instruction to a window drawing module, where the drawing instruction is used to instruct the window drawing module to draw an interface of the head unit that is switched to a new focus window.

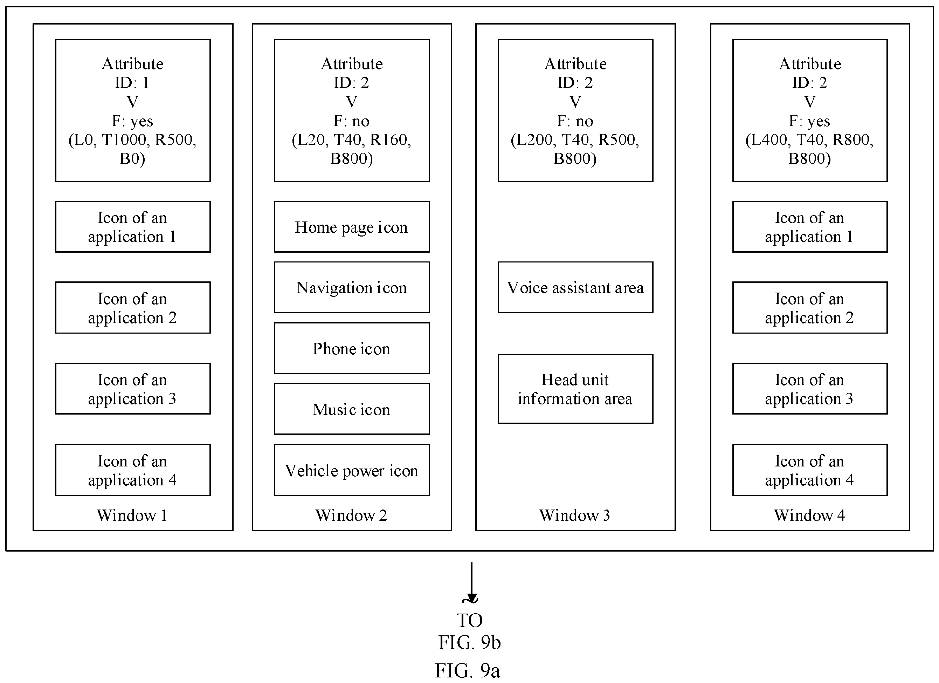

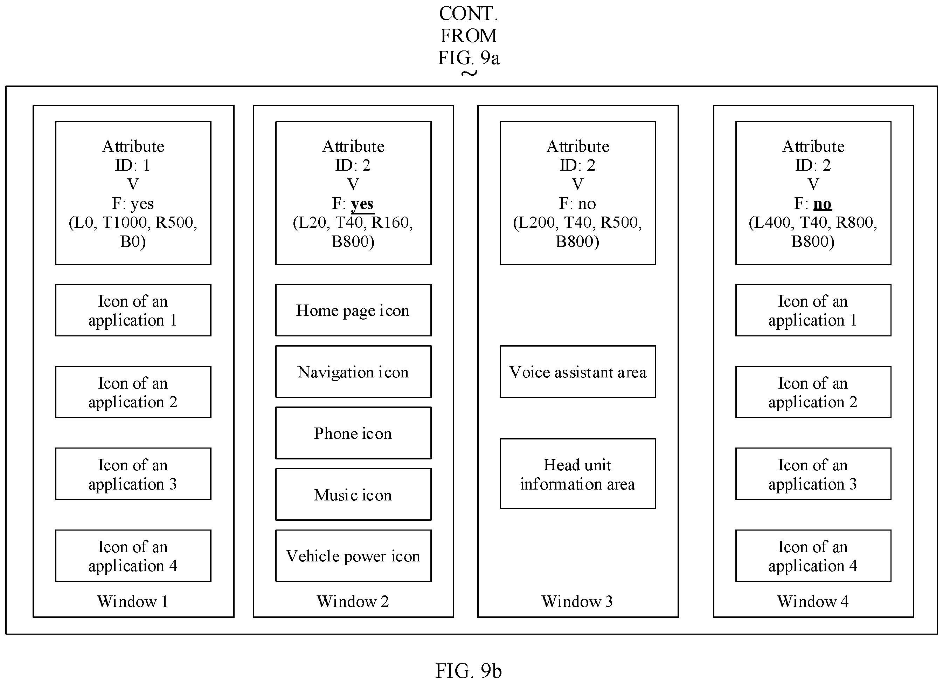

If determining that the new focus window exists, the window management service module may send the drawing instruction to the window drawing module. The drawing instruction is used to instruct the window drawing module to draw the interface of the head unit that is switched to the new focus window. The target window switching operation is switching the focus window to a new focus window, that is, the focus window changes. The window management service module can invoke a setFocusStack method to modify a window attribute. A value corresponding to focus in attribute information of the new focus window is modified from (no) to (yes), and the window management service module may modify the value corresponding to focus in the attribute information of an original focus window from (yes) to (no), to represent that the new focus window is the window 2. As shown in FIG. 9a and FIG. 9b, the window information stored in the window management service module changes from a to b, where a in FIG. 9a and FIG. 9b may be the same as that in FIG. 6. It should be understood that, in FIG. 9a and FIG. 9b, an underscore is used to represent a focus attribute of a window change in information about the window.

In a possible implementation, the window management service module may invoke an updateFocusedWindowLocked method to send the drawing instruction to the window drawing module. The drawing instruction may be used to indicate the new focus window. For example, the drawing instruction may include a display ID of the new focus window, for example, the display ID is 2, to instruct the window drawing module to draw an interface of the head unit that is switched to the new focus window 2.

S508: The window drawing module draws, according to the drawing instruction, the interface of the head unit that is switched to the new focus window.

The window drawing module may store information about the interface of the head unit. The information about the interface may include elements in the interface and a layout of the elements.

It should be understood that "an interface of the head unit that is switched to a new focus window" may be an interface of the head unit whose focus window is the second window.

In a possible implementation, the window drawing module may delete, from the interface of the head unit before switching to the new focus window, a selection box surrounding the icon of the application 1, and draw a selection box surrounding the window 2 (the dock area), to obtain the interface of the head unit that is switched to the new focus window.

In a possible implementation, the window drawing module may alternatively switch to the interface of the head unit before the new focus window, and re-draw, according to the drawing instruction, the interface of the head unit that is switched to the new focus window. Compared with the interface of the head unit before switching to the new focus window, the interface of the head unit that is switched to the new focus window is drawn with the selection box around the window 2 (the dock area).

S509: The window drawing module sends, to a display module, the interface of the head unit that is switched to the new focus window.

S510: The display module displays the interface of the head unit that is switched to the new focus window.

When receiving the interface of the head unit that is switched to the new focus window, the display module may display the interface of the head unit that is switched to the new focus window. For example, as shown in FIG. 7, the interface of the head unit is switched from an interface 701 to an interface 702, and a selection box in the interface 702 surrounds the window 2 (the dock area), to represent that the focus window is switched to the dock area.

In a possible implementation, in the interface 702, the selection box may be used to enclose a first icon (for example, a home page icon) in the dock area, to represent that a current window is switched to the dock area. Alternatively, in the interface 702, any icon in the dock area may be surrounded by the selection box, to represent that the current window is switched to the dock area. It should be understood that in FIG. 7, an example in which the mechanical component is a knob, a rocker, or a button is used for description.

In an embodiment, when the mechanical component management module detects an operation performed by the user on the mechanical component, the focus window on the interface of the head unit may be switched from the first window to the second window, as shown in FIG. 7. The first window may be a content level-2 window, and the second window may be a taskbar window. In an embodiment, when drawing an interface of the head unit whose focus window is the second window, the terminal device may adapt to a shape and a size of a display interface of the head unit, adjust the drawn focus window to the interface of the head unit whose focus window is the second window, and send the adjusted interface of the head unit whose focus window is the second window to the head unit, and the head unit displays the adjusted interface of the head unit whose focus window is the second window. Alternatively, in an embodiment, the head unit receives, from the terminal device, the interface of the head unit whose focus window is the second window, and may adapt to a shape and a size of a display interface of the head unit, and adjust the interface of the head unit whose focus window is the second window, to display the adjusted interface of the head unit whose focus window is the second window. It should be understood that the terminal device or the head unit adjusts the interface of the head unit whose focus window is the second window may be: adjusting a size of the interface of the head unit whose focus window is the second window, or adjusting a layout of elements on the interface of the head unit whose focus window is the second window, so that the adjusted interface of the head unit whose focus window is the second window is adapted to the shape and the size of the display interface of the head unit.

S511: The window management service module does not perform processing.

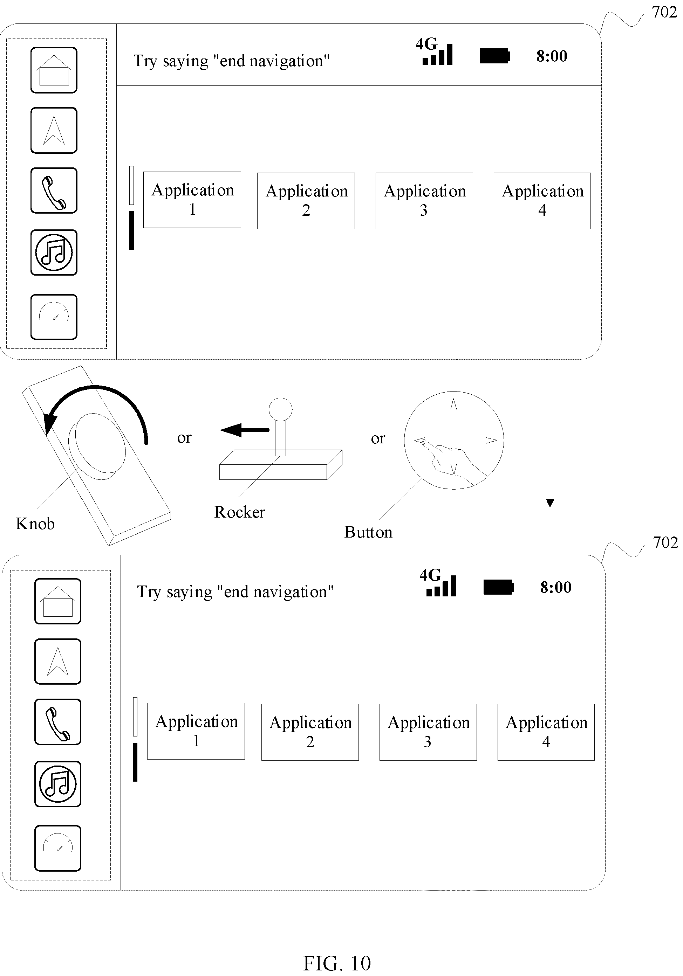

If the window management service module determines that there is no new focus window, the window management service module does not perform processing. For example, as shown in the interface 702, the interface of the head unit displays the selection box surrounding the dock area. In other words, the dock area (the window 2) is the focus window. If the user fastly rotates the knob to the left in this case, a corresponding target window switching operation is switching a window to the left. The window management service module performs S506, and may determine that there is no other window on a left side of the window 2, and the window management service module determines that there is no new focus window. In this manner, the window management service module may not perform processing, and the interface of the head unit is still shown in the interface 702, as shown in FIG. 10.

In this embodiment of this application, the user may control the interface of the head unit by the terminal device by operating the mechanical component disposed on the vehicle. Specifically, the terminal device controls switching of a window displayed on the interface of the head unit, and the user may operate the mechanical component without head swinging or in short time in a driving process. This improves driving safety of the user.

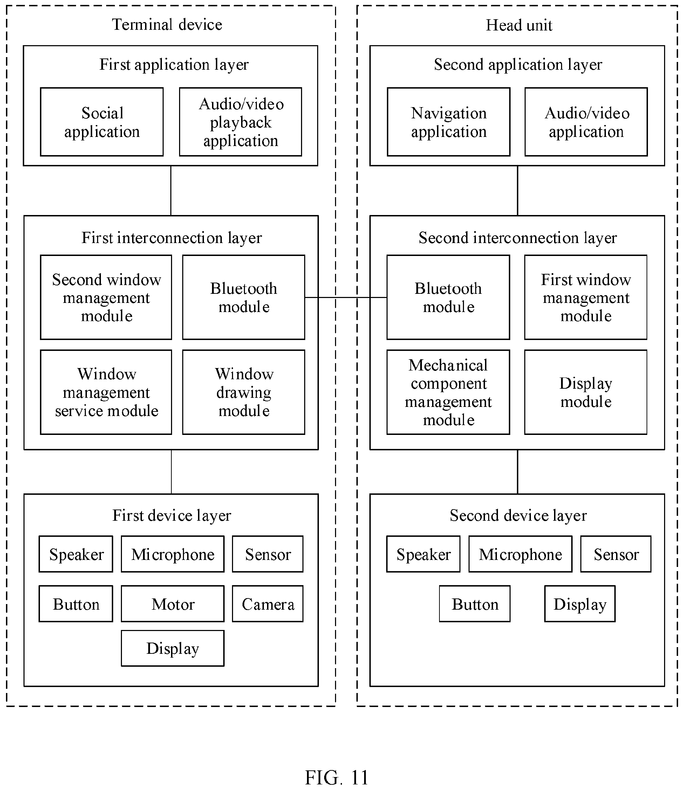

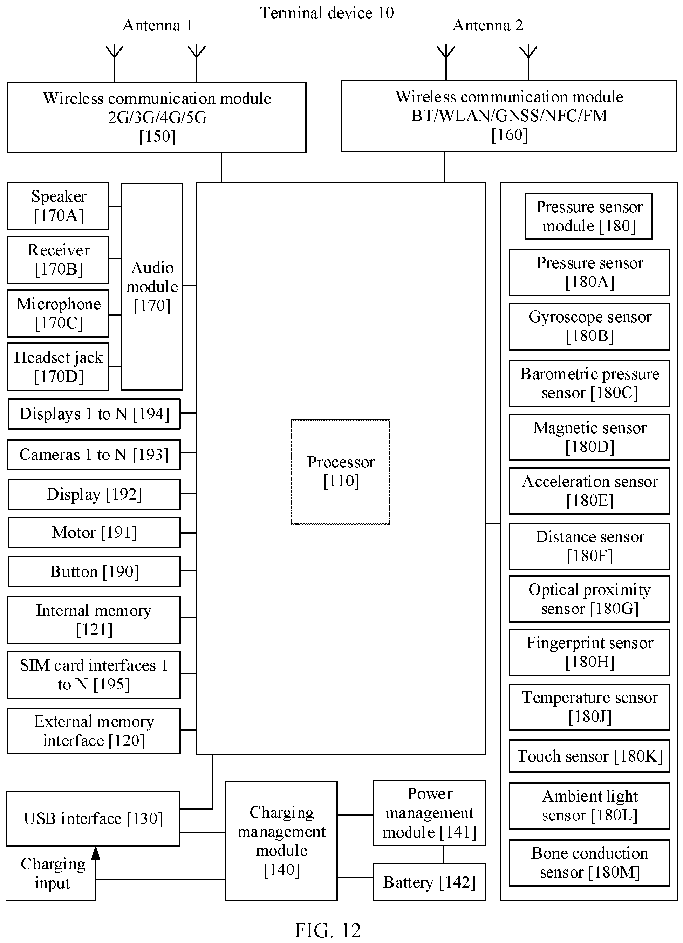

FIG. 11 is a schematic diagram of a system software structure to which an embodiment of this application is applicable. As shown in FIG. 11, a terminal device may include a first application layer, a first interconnection layer, and a first device layer, and a head unit may include a second application layer, a second interconnection layer, and a second device layer. The first application layer may include a social application, an audio/video playback application, and the like in the terminal device. With reference to the control method for projection of an interface from the terminal device to the head unit in embodiments of this application, the first interconnection layer may include a HiCar device and a service discovery connection module, and a projection and reverse control module. The HiCar device and service discovery connection module may be, for example, a Bluetooth module, and the Bluetooth module is configured to connect the terminal device and the head unit. The projection and reverse control module may include the foregoing second window management module, the foregoing window management service module, and the foregoing window drawing module. The first device layer may include a hardware device in the terminal device, and the hardware device may include but is not limited to a speaker, a microphone, a sensor, a button, a motor, a camera, and a display. A specific structure of the terminal device may be shown in FIG. 12. The second application layer may include an application in the head unit, for example, a navigation application or an audio and video application in the head unit. The second interconnection layer may include a HiCar device and a service discovery connection module, and a projection and reverse control module. The HiCar device and the service discovery connection module may be, for example, a Bluetooth module, and the projection and reverse control module may include the foregoing first window management module, the foregoing display module, and the foregoing mechanical component management module. The second device layer may include a hardware device in the head unit. The hardware device may include but is not limited to a speaker, a microphone, a sensor, a button, and a display.

FIG. 12 is a schematic diagram of a structure of a terminal device according to an embodiment of this application. As shown in FIG. 12, the terminal device 10 in this embodiment of this application may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor, a button 190, a motor 191, an indicator, a camera 193, a display 194, a subscriber identification module (subscriber identification module, SIM) card interface 195, and the like. It may be understood that the structure shown in this embodiment does not constitute a specific limitation on the terminal device 10. In some other embodiments of this application, the terminal device 10 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a display processing unit (display processing unit, DPU), a neural network processing unit (neural network processing unit, NPU), and/or the like. Different processing units may be independent components, or may be integrated into one or more processors. In some embodiments, the terminal device 10 may alternatively include one or more processors 110. The controller may be a nerve center and a command center of the terminal device 10. The processor may generate an operation control signal based on an instruction operation code and a time sequence signal, to complete control of instruction reading and instruction execution. A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor 110 may directly invoke the instructions or the data from the memory. This avoids repeated access and reduces waiting time of the processor 110, and improves system efficiency of the terminal device 10.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The USB interface 130 is an interface that conforms to a USB standard specification, and may be specifically a mini USB interface, a micro USB interface, a USB Type-C interface, or the like. The USB interface 130 may be configured to connect to a charger to charge the terminal device 10, or may be configured to transmit data between the terminal device 10 and a peripheral device, or may be configured to connect to a headset for playing audio through the headset.

It can be understood that an interface connection relationship between the modules illustrated in this embodiment of this application is merely an example for description, and does not constitute a limitation on the structure of the terminal device 10. In some other embodiments of this application, the terminal device 10 may alternatively use an interface connection mode different from that in the foregoing embodiment, or use a combination of a plurality of interface connection modes.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive wireless charging input by using a wireless charging coil of the terminal device 10. The charging management module 140 supplies power to the terminal device 10 by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (an electric leakage or impedance). In some other embodiments, the power management module 141 may alternatively be disposed in the processor 110. In some other embodiments, the power management module 141 and the charging management module 140 may alternatively be disposed in a same device.

A wireless communication function of the terminal device 10 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the terminal device 10 may be configured to cover one or more communications frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the terminal device 10. The mobile communication module 150 may include at least one filter, a switch, a power amplifier, a low noise amplifier, and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some function modules in the mobile communication module 150 may be disposed in a same component as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same component as the mobile communication module 150 or another function module.

The wireless communication module 160 may provide wireless communication solutions, applied to the terminal device 10, that include a wireless local area network (wireless local area networks, WLAN), Bluetooth, a global navigation satellite system (global navigation satellite system, GNSS), frequency modulation (frequency modulation, FM), NFC, an infrared (infrared, IR) technology, and the like. The wireless communication module 160 may be one or more components integrating at least one communications processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the terminal device 10, the antenna 1 and the mobile communication module 150 are coupled, and the antenna 2 and the wireless communication module 160 are coupled, so that the terminal device 10 can communicate with a network and another device by using a wireless communication technology. The wireless communication technology may include a GSM, a GPRS, CDMA, WCDMA, TD-SCDMA, LTE, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal device 10 implements a display function through a GPU, the display 194, the application processor, and the like. The application processor may include an NPU and a DPU. The GPU is a microprocessor for image processing, and is connected to the display 194 and the application processor. The GPU is configured to: perform mathematical and geometric computation, and render an image. The processor 110 may include one or more GPUs that execute instructions to generate or change display information. The NPU is a neural network (neural network, NN) computing processor, quickly processes input information by referring to a structure of a biological neural network, for example, by referring to a mode of transmission between human brain neurons, and may further continuously perform self-learning. The NPU can implement applications such as intelligent cognition of the terminal device 10, such as image recognition, facial recognition, speech recognition, and text understanding. The DPU is also referred to as a display sub-system (Display Sub-System, DSS). The DPU is configured to adjust a color of the display 194, and the DPU may adjust the color of the display by using a three-dimensional lookup table (3D lookup table, 3D LUT). The DPU can also perform scaling, noise reduction, contrast enhancement, backlight brightness management, HDR processing, and display parameter Gamma adjustment on an image.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), and the like. In some embodiments, the terminal device 10 may include one or N displays 194, where N is a positive integer greater than 1.

The terminal device 10 may implement a photographing function by using the ISP, one or more cameras 193, the video codec, the GPU, one or more displays 194, the application processor, and the like.

The external memory interface 120 may be configured to connect to an external storage card, for example, a Micro SD card, to extend a storage capability of the terminal device 10. The external storage card communicates with the processor 110 through the external memory interface 120, to implement a data storage function. For example, data files such as music, a photo, and a video are stored in the external memory card.

The internal memory 121 may be configured to store one or more computer programs, and the one or more computer programs include instructions. The processor 110 runs the instructions stored in the internal memory 121, to perform various function applications of the terminal device 10 and data processing. The internal memory 121 may include a program storage area and a data storage area. The program storage area may store an operating system. The program storage area may further store one or more applications (for example, Gallery and Contacts), and the like. The data storage area may store data (for example, a photo and a contact) created during use of the terminal device 10, and the like. In addition, the internal memory 121 may include a high-speed random access memory, and may further include a non-volatile memory, for example, at least one magnetic disk storage device, a flash memory device, or a universal flash memory (universal flash storage, UFS). In some embodiments, the processor 110 runs instructions stored in the internal memory 121 and/or instructions stored in the memory disposed in the processor 110, to enable the terminal device 10 to perform various function applications and data processing.

The terminal device 10 may implement an audio function by using the audio module 170, the speaker 170A, the receiver 170B, the microphone 170C, the headset jack 170D, the application processor, and the like, for example, music playback and recording. The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some function modules in the audio module 170 are disposed in the processor 110. The speaker 170A, also referred to as a "loudspeaker", is configured to convert an audio electrical signal into a sound signal. The terminal device 10 may listen to music or answer a hands-free call by using the speaker 170A. The receiver 170B, also referred to as an "earpiece", is configured to convert an audio electrical signal into a sound signal. When the terminal device 10 answers a call or receives voice information, the receiver 170B may be placed close to a human ear to listen to a voice. The microphone 170C, also referred to as a "mike" or a "mic", is configured to convert a sound signal into an electrical signal. When making a call or sending voice information, a user may make a sound by moving a human mouth close to the microphone 170C to input a sound signal to the microphone 170C. At least one microphone 170C may be disposed in the terminal device 10. In some other embodiments, two microphones 170C may be disposed in the terminal device 10, to collect a sound signal and further implement a noise reduction function. In some other embodiments, three, four, or more microphones 170C may alternatively be disposed in the terminal device 10, to collect a sound signal, reduce noise, identify a sound source, implement a directional recording function, and the like. The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The sensor 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The button 190 includes a power button, a volume button, and the like. The button 190 may be a mechanical button, or may be a touch button. The terminal device 10 may receive a key input, and generate a key signal input related to a user setting and function control of the terminal device 10. In an embodiment, the head unit provided in embodiments of this application may include a processor (for example, a CPU), a memory, a transceiver, and an output apparatus. The memory may include a high-speed random access memory (random access memory, RAM), or may further include a non-volatile memory (non-volatile memory, NVM), for example, at least one magnetic disk memory. The memory may store various instructions. The processor is configured to read and execute the instructions in the memory, to implement the method steps in this application. The transceiver is configured to perform the receiving and sending actions in the foregoing embodiments. The output apparatus may be a display to display an interface of the head unit. Optionally, the head unit in this application may further include a power supply, a communication bus, and a communication port. The communication port is configured to implement connection and communication between the head unit and another peripheral (for example, a terminal device). In this embodiment of this application, the memory is configured to store computer-executable program code. The program code includes instructions. When the processor executes the instructions, the instructions enable the head unit to perform the actions in the foregoing method embodiments. An implementation principle and a technical effect of this embodiment are similar to those of the foregoing method embodiments. Details are not described herein again.

For example, the foregoing modules may be configured as one or more integrated circuits for performing the foregoing methods, for example, one or more application specific integrated circuits (application specific integrated circuits, ASICs), one or more microprocessors (digital signal processors, DSPs), or one or more field programmable gate arrays (field programmable gate arrays, FPGAs). For another example, when one of the foregoing modules is implemented in a form of scheduling program code by a processing element, the processing element may be a general-purpose processor, such as a central processing unit (central processing unit, CPU) or another processor that can invoke the program code. For another example, these modules may be integrated together and implemented in a form of a system-on-a-chip (system-on-a-chip, SOC).

All or some of the foregoing embodiments may be implemented by software, hardware, firmware, or any combination thereof. When the software is used to implement embodiments, all or a part of embodiments may be implemented in a form of a computer program product. The compute program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (Solid State Disk, SSD)), or the like.

The term "a plurality of" in this specification means two or more than two. The term "and/or" in this specification describes only an association relationship for describing associated objects and indicates that there may be three relationships. For example, A and/or B may represent the following three cases: Only A exists, both A and B exist, and only B exists. In addition, the character "/" in this specification usually indicates an "or" relationship between the associated objects. In the formula, the character "/" indicates a "division" relationship between the associated objects.

It may be understood that various numbers in embodiments of this application are merely used for differentiation for ease of description, and are not used to limit the scope of embodiments of this application. In embodiments of this application, sequence numbers of the processes do not mean execution sequences. The execution sequences of the processes should be determined based on functions and internal logic of the processes, and should not constitute any limitation on the implementation processes in embodiments of this application.

## Claims

1. An interface control method, wherein the method is applied to a head unit (20) in a vehicle, the head unit (20) is connected to a mechanical component, and the method comprises:
detecting (S501) an operation performed by a user on the mechanical component; and
switching a focus window on an interface of the head unit (20) from a first window to a second window in response to the operation, wherein the interface of the head unit (20) is an interface projected by a terminal device (10) on the head unit (20), wherein, before the switching a focus window on an interface of the head unit (20) from a first window to a second window, the method further comprises:
generating (S501) a mechanical event based on the operation;
sending (S502) the mechanical event to the terminal device (10); and
receiving (S509), from the terminal device (10), the interface of the head unit (20) whose focus window is the second window, wherein the generating a mechanical event comprises storing, by the head unit (20), a mapping relationship between the operation and an event, wherein the mapping relationship includes the mapping relationship between the operation and the event and a mapping relationship between the mechanical operation and the event; and using, based on the operation performed by the user on the mechanical component and the mapping relationship, an event mapped by the operation as the mechanical event,
and an application is not projected on the head unit (20) if it is not stored in a trustlist that is stored on the terminal device and that includes an identifier of the application,
wherein the operation is a rotation operation on the mechanical component, and the generating a mechanical event based on the operation comprises:
detecting a speed of the rotation operation; and
generating a fast rotation event in response to a fact that the speed of the rotation operation is greater than or equal to a preset speed, wherein the fast rotation event comprises a fast left rotation event or a fast right rotation event.

2. The method according to claim 1, wherein when the fast rotation event is the fast left rotation event, the second window is a window that is closest to the first window and located on a left side of the first window; or when the fast rotation event is the fast right rotation event, the second window is a window that is closest to the first window and located on a right side of the first window.

3. An interface control method, wherein the method is applied to a terminal device (10), and the method comprises:
receiving a mechanical event from a head unit (20);
parsing (S503) the mechanical event, and obtaining a target window switching operation corresponding to the mechanical event;
determining (S506), based on the target window switching operation, that a focus window on an interface of the head unit (20) is switched from a first window to a second window; and
sending (S509), to the head unit (20), the interface of the head unit (20) whose focus window is the second window, wherein the parsing the mechanical event, and obtaining a target window switching operation comprises storing, by the terminal device (10), a mapping relationship between a mechanical event and a window switching operation; and using as the target window switching operation, a window switching operation to which the mechanical event from the head unit (20) is mapped,
and an application is not projected on the head unit (20) if it is not stored in a trustlist that is stored on the terminal device and that includes an identifier of the application,
wherein the mechanical event is generated by the head unit (20) based on a rotation operation performed by a user on a mechanical component, and a speed of the rotation operation is greater than or equal to a preset speed, wherein
the mechanical event is a fast left rotation event, and the target window switching operation is switching a window to the left; or
the mechanical event is a fast right rotation event, and the target window switching operation is switching a window to the right.

4. The method according to claim 3, wherein the determining, based on the target window switching operation, that a focus window on an interface of the head unit (20) is switched from a first window to a second window comprises:
determining, based on the target window switching operation, a position of the first window, and a position of another window on the interface of the head unit (20), that the focus window on the interface of the head unit (20) is switched from the first window to the second window.

5. The method according to any one of claims 3 or 4, wherein before the sending, to the head unit (20), the interface of the head unit (20) whose focus window is the second window, the method further comprises:
modifying a focus attribute of the second window, wherein a modified focus attribute of the second window is used to indicate that the second window is the focus window.

6. An electronic device, comprising a memory and a processor (110), wherein the memory is configured to store program code, and the processor (110) is configured to execute the program code to implement the method according to any one of claims 1 or 2 or 3 to 5.

7. A computer-readable storage medium, wherein the computer storage medium stores computer instructions, and when the computer instructions are executed by a computer, the computer is enabled to perform the method according to any one of claims 1 or 2 or 3 to 5.

## Patentansprüche

1. Benutzeroberflächensteuerverfahren, wobei das Verfahren in einer Haupteinheit (20) in einem Fahrzeug angewandt wird, wobei die Haupteinheit (20) mit einer mechanischen Komponente verbunden ist und wobei das Verfahren umfasst:
Erkennen (S501) einer Operation, die von einem Benutzer an der mechanischen Komponente durchgeführt wird; und
Umschalten eines Fokusfensters auf einer Benutzeroberfläche der Haupteinheit (20) von einem ersten Fenster zu einem zweiten Fenster als Reaktion auf die Operation, wobei die Benutzeroberfläche der Haupteinheit (20) eine Benutzeroberfläche ist, die von einer Endgerätevorrichtung (10) auf die Haupteinheit (20) projiziert wird, wobei das Verfahren vor dem Umschalten eines Fokusfensters auf einer Benutzeroberfläche der Haupteinheit (20) von einem ersten Fenster zu einem zweiten Fenster ferner umfasst:
Erzeugen (S501) eines mechanischen Ereignisses basierend auf der Operation;
Senden (S502) des mechanischen Ereignisses an die Endgerätevorrichtung (10); und
Empfangen (S509), von der Endgerätevorrichtung (10), der Benutzeroberfläche der Haupteinheit (20), deren Fokusfenster das zweite Fenster ist, wobei das Erzeugen eines mechanischen Ereignisses ein Speichern, durch die Haupteinheit (20), einer Zuordnungsbeziehung zwischen der Operation und einem Ereignis umfasst, wobei die Zuordnungsbeziehung die Zuordnungsbeziehung zwischen der Operation und dem Ereignis und eine Zuordnungsbeziehung zwischen der mechanischen Operation und dem Ereignis beinhaltet; und ein Verwenden, basierend auf der Operation, die von dem Benutzer an der mechanischen Komponente durchgeführt wird, und der Zuordnungsbeziehung, eines Ereignisses umfasst, das durch die Operation als das mechanische Ereignis zugeordnet wird,
und wobei eine Anwendung nicht auf die Haupteinheit (20) projiziert wird, wenn sie nicht in einer Vertrauensliste gespeichert ist, die in der Endgerätevorrichtung gespeichert ist und die eine Kennung der Anwendung beinhaltet,
wobei die Operation eine Drehoperation an der mechanischen Komponente ist und wobei das Erzeugen eines mechanischen Ereignisses basierend auf der Operation umfasst:
Erkennen einer Geschwindigkeit der Drehoperation; und
Erzeugen eines schnellen Drehereignisses als Reaktion auf eine Tatsache, dass die Geschwindigkeit der Drehoperation größer oder gleich einer voreingestellten Geschwindigkeit ist, wobei das schnelle Drehereignis ein schnelles Linksdrehereignis oder ein schnelles Rechtsdrehereignis umfasst.

2. Verfahren nach Anspruch 1, wobei, wenn das schnelle Drehereignis das schnelle Linksdrehereignis ist, das zweite Fenster ein Fenster ist, das sich am Nächsten zu dem ersten Fenster befindet und auf einer linken Seite des ersten Fensters angebracht ist; oder wenn das schnelle Drehereignis das schnelle Rechtsdrehereignis ist, das zweite Fenster ein Fenster ist, das sich am Nächsten zu dem ersten Fenster befindet und auf einer rechten Seite des ersten Fensters angebracht ist.

3. Benutzeroberflächensteuerverfahren, wobei das Verfahren in einer Endgerätevorrichtung (10) angewandt wird und wobei das Verfahren umfasst:
Empfangen eines mechanischen Ereignisses von einer Haupteinheit (20);
Parsen (S503) des mechanischen Ereignisses und Erhalten einer Zielfensterschaltoperation, die dem mechanischen Ereignis entspricht;
Ermitteln (S506), basierend auf der Zielfensterschaltoperation, dass ein Fokusfenster auf einer Benutzeroberfläche der Haupteinheit (20) von einem ersten Fenster zu einem zweiten Fenster umgeschaltet wird; und
Senden (S509) der Benutzeroberfläche der Haupteinheit (20), deren Fokusfenster das zweite Fenster ist, an die Haupteinheit (20), wobei das Parsen des mechanischen Ereignisses und das Erhalten einer Zielfensterschaltoperation umfassen: Speichern, durch die Endgerätevorrichtung (10), einer Zuordnungsbeziehung zwischen einem mechanischen Ereignis und einer Fensterschaltoperation; und Verwenden einer Fensterschaltoperation, zu der das mechanische Ereignis von der Haupteinheit (20) zugeordnet wird, als die Zielfensterschaltoperation,
und wobei eine Anwendung nicht auf die Haupteinheit (20) projiziert wird, wenn sie nicht in einer Vertrauensliste gespeichert ist, die in der Endgerätevorrichtung gespeichert ist und die eine Kennung der Anwendung beinhaltet,
wobei das mechanische Ereignis durch die Haupteinheit (20) basierend auf einer Drehoperation erzeugt wird, die von einem Benutzer an einer mechanischen Komponente durchgeführt wird, und wobei eine Geschwindigkeit der Drehoperation größer als oder gleich einer voreingestellten Geschwindigkeit ist, wobei
das mechanische Ereignis ein schnelles Linksdrehereignis ist und die Zielfensterschaltoperation ein Fenster nach links umschaltet; oder
wobei das mechanische Ereignis ein schnelles Rechtsdrehereignis ist, und die Zielfensterschaltoperation ein Fenster nach rechts umschaltet.

4. Verfahren nach Anspruch 3, wobei das Ermitteln, basierend auf der Zielfensterschaltoperation, dass ein Fokusfenster auf einer Benutzeroberfläche der Haupteinheit (20) von einem ersten Fenster zu einem zweiten Fenster umgeschaltet wird, umfasst:
Ermitteln, basierend auf der Zielfensterschaltoperation, einer Position des ersten Fensters und einer Position eines anderen Fensters auf der Benutzeroberfläche der Haupteinheit (20), dass das Fokusfenster auf der Benutzeroberfläche der Haupteinheit (20) von dem ersten Fenster zu dem zweiten Fenster umgeschaltet wird.

5. Verfahren nach einem der Ansprüche 3 oder 4, wobei das Verfahren vor dem Senden der Benutzeroberfläche der Haupteinheit (20) an die Haupteinheit (20), deren Fokusfenster das zweite Fenster ist, ferner umfasst:
Modifizieren eines Fokusattributs des zweiten Fensters, wobei ein modifiziertes Fokusattribut des zweiten Fensters verwendet wird, um anzuzeigen, dass das zweite Fenster das Fokusfenster ist.

6. Elektronische Vorrichtung, die einen Speicher und einen Prozessor (110) umfasst, wobei der Speicher konfiguriert ist zum Speichern eines Programmcodes und der Prozessor (110) konfiguriert ist zum Ausführen, des Programmcodes, um das Verfahren nach einem der Ansprüche 1 oder 2 oder 3 bis 5 zu implementieren.

7. Computerlesbares Speichermedium, wobei in dem computerlesbaren Speichermedium Computeranweisungen gespeichert sind und wobei, wenn die Computeranweisungen von einem Computer ausgeführt werden, der Computer aktiviert wird, um das Verfahren nach einem der Ansprüche 1 oder 2 oder 3 bis 5 durchzuführen.

## Revendications

1. Procédé de commande d'interface, le procédé étant appliqué à une unité de tête (20) dans un véhicule, l'unité de tête (20) étant connectée à un composant mécanique, et le procédé comprenant :
la détection (S501) d'une opération effectuée par un utilisateur sur le composant mécanique ; et
la commutation d'une fenêtre de focalisation sur une interface de l'unité de tête (20) d'une première fenêtre à une seconde fenêtre en réponse à l'opération, l'interface de l'unité de tête (20) étant une interface projetée par un dispositif terminal (10) sur l'unité de tête (20), avant la commutation d'une fenêtre de focalisation sur une interface de l'unité de tête (20) d'une première fenêtre à une seconde fenêtre, le procédé comprenant en outre :
la génération (S501) d'un événement mécanique sur la base de l'opération ;
l'envoi (S502) de l'événement mécanique au dispositif terminal (10) ; et
la réception (S509), en provenance du dispositif terminal (10), de l'interface de l'unité de tête (20) dont la fenêtre de focalisation est la seconde fenêtre, la génération d'un événement mécanique comprenant le stockage, par l'unité de tête (20), d'une relation de mise en correspondance entre l'opération et un événement, la relation de mise en correspondance incluant la relation de mise en correspondance entre l'opération et l'événement et une relation de mise en correspondance entre l'opération mécanique et l'événement ; et l'utilisation, sur la base de l'opération effectuée par l'utilisateur sur le composant mécanique et de la relation de mise en correspondance, d'un événement mis en correspondance par l'opération comme événement mécanique,
et une application n'étant pas projetée sur l'unité de tête (20) si elle n'est pas stockée dans une liste de confiance qui est stockée sur le dispositif terminal et qui inclut un identifiant de l'application,
l'opération étant une opération de rotation sur le composant mécanique, et la génération d'un événement mécanique sur la base de l'opération comprenant :
la détection d'une vitesse de l'opération de rotation ; et
la génération d'un événement de rotation rapide en réponse au fait que la vitesse de l'opération de rotation est supérieure ou égale à une vitesse prédéterminée, l'événement de rotation rapide comprenant un événement de rotation rapide vers la gauche ou un événement de rotation rapide vers la droite.

2. Procédé selon la revendication 1, lorsque l'événement de rotation rapide est l'événement de rotation rapide vers la gauche, la seconde fenêtre est une fenêtre qui est la plus proche de la première fenêtre et située sur un côté gauche de la première fenêtre ; ou lorsque l'événement de rotation rapide est l'événement de rotation rapide vers la droite, la seconde fenêtre est une fenêtre qui est la plus proche de la première fenêtre et située sur un côté droit de la première fenêtre.

3. Procédé de commande d'interface, le procédé étant appliqué à un dispositif terminal (10), et le procédé comprenant :
la réception d'un événement mécanique en provenance d'une unité de tête (20) ;
l'analyse (S503) de l'événement mécanique, et l'obtention d'une opération de commutation de fenêtre cible correspondant à l'événement mécanique ;
la détermination (S506), sur la base de l'opération de commutation de fenêtre cible, qu'une fenêtre de focalisation sur une interface de l'unité de tête (20) est commutée d'une première fenêtre à une seconde fenêtre ; et
l'envoi (S509), à l'unité de tête (20), de l'interface de l'unité de tête (20) dont la fenêtre de focalisation est la seconde fenêtre, l'analyse de l'événement mécanique et l'obtention d'une opération de commutation de fenêtre cible comprenant le stockage, par le dispositif terminal (10), d'une relation de mise en correspondance entre un événement mécanique et une opération de commutation de fenêtre ; et l'utilisation, comme opération de commutation de fenêtre cible, d'une opération de commutation de fenêtre à laquelle l'événement mécanique provenant de l'unité de tête (20) est mis en correspondance,
et une application n'étant pas projetée sur l'unité de tête (20) si elle n'est pas stockée dans une liste de confiance qui est stockée sur le dispositif terminal et qui inclut un identifiant de l'application,
l'événement mécanique étant généré par l'unité de tête (20) sur la base d'une opération de rotation effectuée par un utilisateur sur un composant mécanique, et une vitesse de l'opération de rotation étant supérieure ou égale à une vitesse prédéterminée,
l'événement mécanique étant un événement de rotation rapide vers la gauche, et l'opération de commutation de fenêtre cible commutant une fenêtre vers la gauche ; ou
l'événement mécanique étant un événement de rotation rapide vers la droite, et l'opération de commutation de fenêtre cible commutant une fenêtre vers la droite.

4. Procédé selon la revendication 3, la détermination, sur la base de l'opération de commutation de fenêtre cible, qu'une fenêtre de focalisation sur une interface de l'unité de tête (20) est commutée d'une première fenêtre à une seconde fenêtre, comprenant :
la détermination, sur la base de l'opération de commutation de fenêtre cible, d'une position de la première fenêtre et d'une position d'une autre fenêtre sur l'interface de l'unité de tête (20), que la fenêtre de focalisation sur l'interface de l'unité de tête (20) est commutée de la première fenêtre à la seconde fenêtre.

5. Procédé selon l'une quelconque des revendications 3 ou 4, avant l'envoi, à l'unité de tête (20), de l'interface de l'unité de tête (20) dont la fenêtre de focalisation est la seconde fenêtre, le procédé comprenant en outre :
la modification d'un attribut de focalisation de la seconde fenêtre, un attribut de focalisation modifié de la seconde fenêtre étant utilisé pour indiquer que la seconde fenêtre est la fenêtre de focalisation.

6. Dispositif électronique, comprenant une mémoire et un processeur (110), la mémoire étant configurée pour stocker un code de programme, et le processeur (110) étant configuré pour exécuter le code de programme pour mettre en œuvre le procédé selon l'une quelconque des revendications 1 ou 2 ou 3 à 5.

7. Support de stockage lisible par ordinateur, le support de stockage informatique stockant des instructions informatiques, et lorsque les instructions informatiques sont exécutées par un ordinateur, l'ordinateur étant en mesure de réaliser le procédé selon l'une quelconque des revendications 1 ou 2 ou 3 à 5.
